# EUROPEAN PATENT APPLICATION

(11) **EP 1 599 045 A1**
(43) Date of publication of application: **23.11.2005**
(21) Application number: 04712159.5
(22) Date of filing: 18.02.2004
(51) Int. Cl.: H04N 7/16

(54) **PROGRAM DATA COMMUNICATION SYSTEM**

(30) Priority: 19.02.2003 JP 2003041100
(71) Applicant: MATSUSHITA ELECTRIC INDUSTRIAL CO., LTD., Kadoma-shi, Osaka 571-8501 (JP)
(72) Inventor: TAKATORI, Masahiro, Osaka 560-0021 (JP); KATAOKA, Mitsuteru, Osaka 576-0034 (JP)
(74) Representative: Eisenführ, Speiser & Partner
(86) International application number: PCT/JP2004/001759
(87) International publication number: WO 2004/075549

(57) **Abstract**

In a program data communication system, in response to a notification request command signal from a program data receiver apparatus for requesting a notification as to whether or not at least one designated program data among a plurality of pieces of program data can be descrambled, a program data transmitter apparatus transmits a notification command signal including information as to whether or not the designated program data can be descrambled by a descrambling section to the program data receiver apparatus. Next, the program data transmitter apparatus descrambles the designated program data in response to a transmission request command signal from the program data receiver apparatus for requesting that the designated program data be transmitted, and then transmits descrambled program data to the program data receiver apparatus.

## Description

### TECHNICAL FIELD

The present invention relates to a program data transmitter apparatus which transmits content data on a program such as a broadcasting program or a distributed program (referred to as a program data hereinafter), a program data receiver apparatus which receives transmitted program data, and a program data communication system which includes the program data transmitter apparatus and the program data receiver apparatus. Examples of the program data transmitter apparatus include a television receiver which receives broadcasting programs, a personal computer which has a function of receiving broadcasting programs, a cable television (referred to as a CATV hereinafter) set-top box which receives broadcasting programs or distributed programs, and a cache server apparatus which is connected to the Internet or the like, which receives program data from a content server apparatus, and which then transfers and transmits the received program data. Examples of the program data receiver apparatus include recording and reproduction apparatuses, such as a DVD (Digital Versatile Disc) recorder, a CD (Compact Disc) recorder and a hard disc recorder, which receive program data and record the received program data into a recording medium such as an optical disc, a television receiver which receives and displays program data, and a portable terminal apparatus such as a cellular telephone which receives and displays program data.

### BACKGROUND ART

Recently, accompanying with onset of digital television broadcasting in Japan, broadcasting programs have been transmitted and recorded as digital signals. In the present digital television broadcasting, scrambled broadcasting programs cannot be received unless an IC (Integrated Circuit) card which stores security information such as a terminal identification number or an identification indication (the identification number or identification indication is referred to as an ID hereinafter), a user name, a user ID, a password, and scrambling key information is inserted into an IC card insertion section. In addition, in case of pay broadcasting, broadcasting programs cannot be received unless an agreement of purchasing the pay broadcasting is concluded either online or offline and the agreement is registered in an IC card. The "IC card" means in the present specification every card that is a conditional access module required for descrambling program data. Examples of the card may include not only the IC card but also the other cards such as a PC card or the like. Concretely, they include CI (Common Interface) according to DVB-T (Digital Video Broadcasting-Terrestrial) as the digital television broadcasting standard in Europe, a Cable CARD according to the Open Cable standard in North America, and an IC card according to ISDB-T (Integrated Services Digital Broadcasting-Terrestrial) as the digital television broadcasting standard in Japan. These CA modules are different from each other in physical specification and electrical specification, however, they are all security modules employed for descrambling and fall in a range of "IC card" according to the present specification.

The Japanese Patent Application Laid-Open No. 2002-111613 discloses, for example, a storage type broadcasting receiver (referred to as a first prior art hereinafter) which receives and records signals distributed by multiplexing agreement confirmation information for judging whether or not each broadcasting receiver enables the user to view a program with scrambled program data. The broadcasting receiver according to the first prior art is constituted as follows so as to promptly notify correspondence between each program currently stored in the broadcasting receiver and an IC card which is to be used to reproduce each program, and for which an agreement is valid before the program is viewed. A program recording apparatus records data demodulated by an RF modulator in a scrambled state, and an agreement confirmation information filter extracts the agreement confirmation information multiplexed with each program from the demodulated data recorded in the program recording apparatus. A control section records the agreement confirmation information extracted by the agreement confirmation filter and an ID of the IC card in a specific region of the program recording apparatus while making them correspond to each other for every program. During the reproduction, the control section reads out the information recorded in the specific region of the program recording apparatus, obtains viewing conditions and the like for each program, and displays the viewing conditions and the like as well as the ID of the corresponding IC card on a screen. In other words, according to the first prior art, a method for indicating which IC card is to be used when the scrambled program data recorded in a recording medium such as a hard disc memory or the like is reproduced is disclosed. In addition, it is disclosed that the agreement confirmation information by which the ID of the IC card is made to correspond to each program is recorded in the recording medium, that the agreement confirmation information is referred to when the program data is read out, and that the necessary IC card is recognized.

Further, the Japanese Patent Application Laid-Open No. 2002-064798 discloses, for example, a digital broadcasting receiver system (referred to as a second prior art hereinafter) which allows, when a plurality of digital broadcasting receivers based on a plurality of viewing agreements are used, the digital broadcasting receivers to exchange viewing agreement information, and which is intended to realize an appropriate viewing environment for a utilization situation of a viewer. Concretely, the digital broadcasting receiver system according to the second prior art includes a plurality of integrated receivers and decoders (referred to as an IRD apparatuses hereinafter) which are connected to each other or the like so as to be communicated with each other, and a viewing agreement information management server apparatus. An IC card is attached into an IC card slot of the viewing agreement information management server. When scrambling keys each for descrambling a program selected by each IRD apparatus or the like is provided from a plurality of IC cards, viewing agreements are exchanged based on information on viewing agreement target programs held by a viewing agreement information management section such as each IC card or the like, and this leads to selecting of an IC card corresponding to the selected program. That is, the second prior art discloses a method for exchanging the viewing agreement information between a server receiver and each IRD apparatus when the scrambled program is viewed among different IRD apparatuses. With this method, it is determined whether or not a viewer can view the selected program, and decoding information on the selected program is transmitted when it is determined that the viewer can view the selected program. In addition, when it is determined that the viewer cannot view the selected program, the decoding information on the selected program is transmitted, the transmitted decoding information is received and the decoded, and information is extracted.

### DISCLOSURE OF THE INVENITON

However, according to the first prior art, when a recording apparatus such as a DVD recorder or the like records the scrambled program, the IC card owned by the user based on the agreement with a broadcasting company is not inserted into the recording apparatus. When the IC card is inserted into a television receiver which serves as a receiver, it is disadvantageously impossible to record the program data. In other words, the user needs to insert the IC card into the receiver according to an indication, and to prepare a server apparatus which distributes program data.

According to the second prior art, it is necessary to transmit a descrambling key through a network. Due to this, it is disadvantageously impossible to keep security. In addition, according to a limited reception system based on the Open Cable standard in North America or the DVB-T (Digital Video Broadcasting-Terrestrial) standard in Europe, the IC card (which is actually a PC card) and a descrambler are constituted by a single CA module. As a result, it is disadvantageously impossible to construct the system according to the second prior art.

Further, it may be considered that a second program receiver which can descramble program data is additionally connected to a first program receiver which cannot descramble the program data, and this leads to descrambling of the program data and viewing the program. However, it is disadvantageously impossible to make program channel select operations of the two program receivers uniform.

Furthermore, when the receiver is moved and the user views the program, if a reception state of a broadcasting wave turns worse, it is disadvantageously impossible to descramble the program data, and therefore the user cannot view the program.

It is a first object of the present invention to provide a program data communication system which can scramble program data and enables the user to view the program data only by inserting a security keeping IC card into one transmitter-side apparatus out of two apparatuses.

It is a second object of the present invention to provide a program data communication system which can solve the above-stated disadvantages, which can keep security of security information, which can use a uniform program channel select operation, and which can scramble program data in a good reception environment to enable the user to view a program.

According to the first aspect of the present invention, there is provided a program data transmitter apparatus including a distribution device, a descrambling device, a first communication device, and a second communication device. The distribution device receives or stores and distributes a plurality of pieces of program data, and the descrambling device descrambles at least one of the plurality of pieces of program data. In response to a notification request command signal from a program data receiver apparatus for requesting a notification as to whether or not at least one designated program data among the plurality of pieces of program data can be descrambled, the first communication device transmits a notification command signal including information as to whether or not the designated program data can be descrambled by the descrambling device to the program data receiver apparatus. The second communication device descrambles the designated program data in response to a transmission request command signal from the program data receiver apparatus for requesting that the designated program data be transmitted, and then transmits descrambled program data to the program data receiver apparatus.

In the program data transmitter apparatus, the descrambling device preferably includes an insertion slot for inserting a card, and judges whether or not at least one of the program data can be descrambled based on presence or absence of the card stored in the card as inserted into the insertion slot.

In addition, in the program data transmitter apparatus, the descrambling device includes an insertion slot for inserting a card, and judges whether or not at least one of the program data can be descrambled based on card identification information stored in the card as inserted into the insertion slot.

Further, in the program data transmitter apparatus, the descrambling device preferably includes an insertion slot for inserting a card, and judges whether or not at least one of the program data can be descrambled based on a purchase status or an agreement status of a program stored in the card as inserted into the insertion slot.

Furthermore, in the program data transmitter apparatus, the descrambling device preferably judges whether or not at least one of the program data can be descrambled based on predetermined membership information.

Furthermore, in the program data transmitter apparatus, the descrambling device preferably generates a decoding key for decoding at least one of the program data based on master key information stored in the card, and decodes at least one of the program data based on a generated decoding key.

In the program data transmitter apparatus, in response to a notification request command signal from the program data receiver apparatus for requesting a notification as to whether or not the at least one designated program among the plurality of pieces of program data can be descrambled, the first communication device preferably transmits a notification command signal for notifying whether or not a predetermined additional provided service related to the designated program data is purchasable to the program data receiver apparatus, receives a notification command signal for requesting purchase of the additional provided service from the program data receiver apparatus in response to the notification command signal from the first communication device, and transmits a notification command signal including information as to whether or not the program data can be descrambled to the program data receiver apparatus in response to the notification command signal from the program data receiver apparatus.

In addition, in the program data transmitter apparatus, in response to a notification request command signal from the program data receiver apparatus for requesting a notification as to whether or not all of the plurality of pieces of program data can be descrambled, the first communication device preferably transmits a notification command signal including information as to whether or not the all pieces of program data can be descrambled to the program data receiver apparatus.

Furthermore, in the program data transmitter apparatus, the first communication device preferably transmits and receives the command signals using an isochronous protocol, and the second communication device transmits the program data using an asynchronous protocol.

According to the second aspect of the present invention, there is provided a program data receiver apparatus including a third communication device, a fourth communication device, and a fifth communication device. The third communication device transmits a notification request command signal for requesting a notification as to whether or not at least one designated program data among a plurality of pieces of program data can be descrambled, to a program data receiver apparatus. The fourth communication device transmits a transmission request command signal for requesting that the designated program data be descrambled and transmitted, in response to a notification command signal from the program data transmitter apparatus, the notification command signal including information as to whether or not the designated program data can be descrambled. The fifth communication device receives the descrambled program data from the program data transmitter apparatus.

In the program data receiver apparatus, the third communication device preferably allows the program data receiver apparatus to receive a notification command signal from the program data transmitter apparatus for notifying whether or not a predetermined additional provided service related to the designated program data is purchasable, and transmits a notification command signal for requesting that the additional provided service be purchased to the program data transmitter apparatus in response to the notification command signal from the program data transmitter apparatus.

In addition, in the program data receiver apparatus, the third and the fourth communication device preferably transmit and receive the command signals using an isochronous protocol, and the fifth communication device receives the program data using an asynchronous protocol.

Furthermore, the program data receiver apparatus preferably further includes a receiver device for receiving the program data, and a descrambling device for descrambling the program data. When the descrambling device cannot descramble the program data as received by the receiver device, the fourth communication device transmits a transmission request command signal for requesting that the program data be descrambled and transmitted to the program data transmitter apparatus.

In addition, in the program data receiver apparatus, the descrambling device preferably includes an insertion slot for inserting a card, and judges whether or not the program data can be descrambled based on presence or absence of the card stored in the card as inserted into the insertion slot.

Further, in the program data receiver apparatus, the descrambling device preferably includes an insertion slot for inserting a card, and judges whether or not at least one of the program data can be descrambled based on card identification information stored in the card as inserted into the insertion slot.

Furthermore, in the program data receiver apparatus, the descrambling device preferably includes an insertion slot for inserting a card, and judges whether or not at least one of the program data can be descrambled based on a purchase status or an agreement status of a program stored in the card as inserted into the insertion slot.

The program data transmitter apparatus preferably further includes a sixth communication device. The sixth communication device receives a notification request command signal for requesting a notification as to whether or not at least one of the program data including predetermined membership information can be descrambled from the program data transmitter apparatus, transfers the predetermined membership information to a content server apparatus communicably connected to the program data transmitter apparatus, and receives an authentication result from the content server apparatus in response to transfer of the predetermined membership information. It is judged whether or not at least one of the program data can be descrambled based on an authentication result.

In addition, the program data transmitter apparatus preferably further includes a descrambling device for descrambling scrambled program data. The sixth communication device receives the scrambled program data which is transmitted from the program data transmitter apparatus, descrambles the received program data by the descrambling device, and transmits the descrambled program data to the program data receiver apparatus.

Further, in the program data transmitter apparatus, the program data transmitter apparatus and the program data receiver apparatus are preferably connected to each other through a radio communication line. In this case, the radio communication line is preferably a radio LAN.

According to the third aspect of the present invention, there is provided a program data communication system including the program data transmitter apparatus, and the program data receiver apparatus. The program data transmitter apparatus and the program data receiver apparatus are connected to each other through a predetermined communication line.

According to the fourth aspect of the present invention, there is provided a program data communication system including the program data transmitter apparatus, the program data receiver apparatus, and the content server apparatus. The program data transmitter apparatus and the content server apparatus are connected to each other through a predetermined first communication line, and the program data transmitter apparatus and the program data receiver apparatus are connected to each other through a predetermined second communication line.

In the program data communication system, information for identifying a network, information for identifying a service, and information for identifying a CA module are preferably stored in a data region of a notification request command signal for requesting a notification as to whether or not the program data can be descrambled.

In addition, in the program data communication system, information for indicating an agreement status of the program and information for discriminating whether the program is purchasable or unpurchasable are preferably stored in a data region of a notification command signal including information as to whether or not the program data can be descrambled.

Further, in the program data communication system, a terminal ID of the data receiver apparatus is preferably stored in a data region of a notification command signal for requesting the additional provided service be purchased.
in the program data communication system, data on a list of packages for which the user of the data transmitter apparatus having been already concluded viewing agreements or a list of services having been already purchased by the user is preferably stored in a data region of a notification command signal including information as to whether or not the program data can be descrambled.

In addition, in the program data communication system, a user ID, a password, and a terminal ID are preferably stored in a data region of a notification request command signal for requesting a notification as to whether or not the program data can be descrambled.

Further, in the program data communication system, information for indicating an agreement status of the program and information for discriminating whether the program is purchasable or unpurchasable are preferably stored in a data region of a notification command signal including information as to whether or not the program data can be descrambled.

Furthermore, in the program data communication system, a terminal ID of the data receiver apparatus is preferably stored in a data region of a notification command signal for requesting that the additional provided service be purchased.

### BRIEF DESCRIPTION OF THE DRAWINGS

Fig. 1 is a block diagram showing a configuration of a program data communication system according to a first preferred embodiment of the present invention.
Fig. 2 is a block diagram showing a configuration of a detailed configuration of a television receiver 401 shown in Fig. 1.
Fig. 3 is a block diagram showing a detailed configuration of a DVD recorder 501 shown in Fig. 1.
Fig. 4 is a sequence diagram showing communication procedures for transmitting and receiving a descrambled transport stream signal (referred to as a TS hereinafter) between the television receiver 401 and the DVD recorder 501 shown in Fig. 1.
Fig. 5 is a diagram showing a format of an AV/ C command for transmitting a command signal under the communication procedures between the television receiver 401 and the DVD recorder 501 shown in Fig. 1.
Fig. 6 is a flowchart showing a TS transmission processing executed by the television receiver 401 shown in Fig. 2.
Fig. 7 is a flowchart showing a TS reception processing executed by the DVD recorder 501 shown in Fig. 3.
Fig. 8 is a block diagram showing a configuration of a program data communication system according to a second preferred embodiment of the present invention.
Fig. 9 is a block diagram showing a detailed configuration of a CATV set-top box 401S shown in Fig. 8.
Fig. 10 is a block diagram showing a detailed configuration of a television receiver 401A shown in Fig. 8.
Fig. 11 is a sequence diagram showing communication procedures for transmitting and receiving a descrambled TS between the CATV set-top box 401S and the television receiver 401A shown in Fig. 8.
Fig. 12 is a diagram showing a format of the descramble enable/disable notification request command used in the communication procedures shown in Fig. 11.
Fig. 13 is a diagram showing a format of a PPV purchasable/unpurchasable notification command or a descramble enable/disable notification command employed in the communication procedures shown in Fig. 11.
Fig. 14 is a diagram showing a format of a purchase request and terminal ID notification command employed in the communication procedures shown in Fig. 11.
Fig. 15 is a flowchart showing a TS transmission processing executed by the CATV set-top box 401S shown in Fig. 9.
Fig. 16 is a flowchart showing a pay-per-view (referred to as a PPV hereinafter) confirmation processing which is a subroutine of Fig. 15.
Fig. 17 is a flowchart showing a TS reception processing executed by the television receiver 401A shown in Fig. 10.
Fig. 18 is a flowchart showing the PPV confirmation processing which is a subroutine of Fig. 17.
Fig. 19 is a sequence diagram showing communication procedures according to a modified preferred embodiment of the second preferred embodiment of the present invention, where the procedures are provided for transmitting and receiving a descrambled TS between a CATV set-top box 401S and a television receiver 401A.
Fig. 20 is a diagram showing a format of a descramble enable/disable notification request command employed in the communication procedures shown in Fig. 19.
Fig. 21 is a diagram showing a format of a descramble enable/disable notification command employed in the communication procedures shown in Fig. 19.
Fig. 22 is a flowchart showing a TS transmission processing employed in the communication procedures, and executed by the CATV set-top box 401S shown in Fig. 9 according to the modified preferred embodiment of the second preferred embodiment of the present invention.
Fig. 23 is a flowchart showing a TS reception processing employed in the communication procedures and executed by the television receiver 401A according to the modified preferred embodiment of the second preferred embodiment of the present invention.
Fig. 24 is a block diagram showing a configuration of a program data communication system according to a third preferred embodiment of the present invention.
Fig. 25 is a block diagram showing a detailed configuration of a portable terminal apparatus 603 shown in Fig. 24.
Fig. 26 is a block diagram showing a detailed configuration of a cache server apparatus 602 shown in Fig. 24.
Fig. 27 is a sequence diagram showing communication procedures for transmitting and receiving a descrambled TS among an original content server apparatus 600, the cache server apparatus 602, and the portable terminal apparatus 603 shown in Fig. 24.
Fig. 28 is a diagram showing a format of a descramble enable/disable notification request command employed in the communication procedures shown in Fig. 27.
Fig. 29 is a diagram showing a format of the descramble enable/ disable notification command employed in the communication procedures shown in Fig. 27.
Fig. 30 is a flowchart showing a TS transmission processing executed by the cache server apparatus 602 shown in Fig. 26.
Fig. 31 is a flowchart showing a confirmation processing which is a subroutine of Fig. 30.
Fig. 32 is a flowchart showing a TS transmission processing executed by the original content server apparatus 600 shown in Fig. 24.
Fig. 33 is a flowchart showing a TS reception processing executed by the portable terminal apparatus 603 shown in Fig. 25.
Fig. 34 is a flowchart showing the confirmation processing which is a subroutine of Fig. 33.

### BEST MODE FOR CARRYING OUT THE INVENTION

### FIRST PREFERRED EMBODIMENT

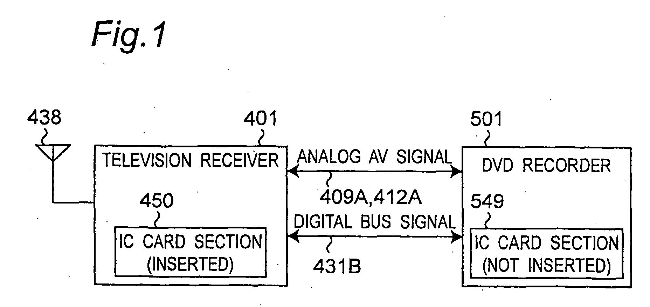

Fig. 1 is a block diagram showing a configuration of a program data communication system according to a first preferred embodiment of the present invention.

Referring to Fig. 1, the program data communication system according to the first preferred embodiment is constituted by including a television receiver 401 which receives and displays content data on a program on a digital television broadcasting wave (referred to as program data hereinafter), and a DVD recorder 501 which records an AV signal including a video signal and an audio signal in a DVD disc and which reproduces the recorded AV signal. The two apparatuses 401 and 501 are connected to each other through a bus wiring 431B for transmitting and receiving digital bus signals including various kinds of command signals (referred to as commands hereinafter) and an AV signal of program data as received and then descrambled by the television receiver 401. In addition, the two apparatuses 401 and 501 are connected to each other through an analog video signal cable 409A and an analog audio signal cable 412A for transmitting the AV signal as received and then demodulated by the television receiver 401 to the DVD recorder 501, and for recording the transmitted AV signal in the DVD recorder 501 so as to transmit the AV signal reproduced by the DVD recorder 501 to the television receiver 401 and to display the reproduced AV signal by the television receiver 401.

The bus wiring 431B is a cable wiring for holding communication using a serial digital bus signal in conformity to, for example, IEEE1394 referred to as so-called "i. link". Alternatively, an Ethernet serial digital bus signal in conformity to, for example, USB (Universal Serial Bus) or IEEE802.3 may used in place of the serial digital bus signal in conformity to IEEE1394, and a radio LAN in conformity to IEEE802.11 or UWB may be used. Further, a parallel bus signal such as HDMI (High-Definition Multi-media Interface) signal or the like may be used, and a baseband signal may be transmitted as the AV signal.

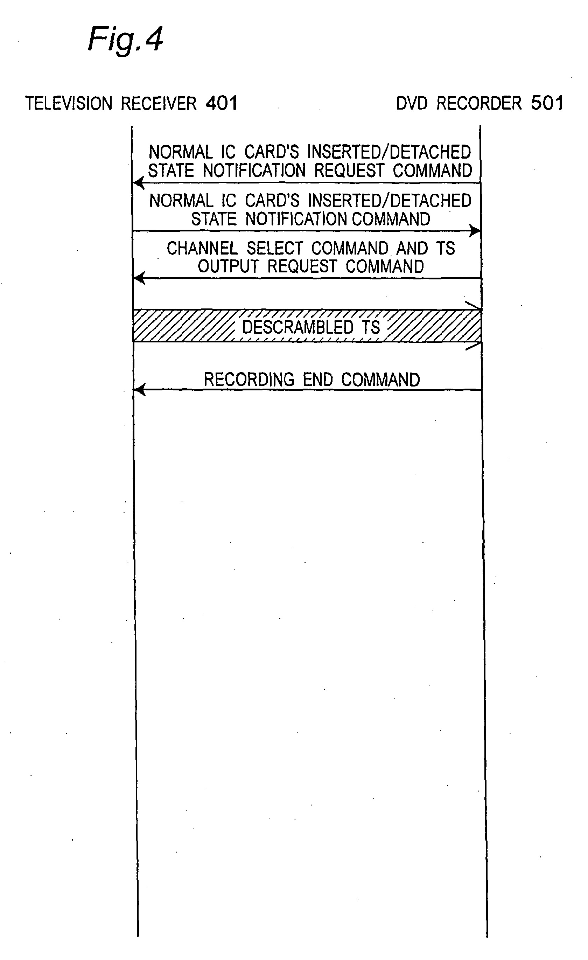

The television receiver 401 according to the present preferred embodiment receives program data on the digital television broadcasting wave using an antenna 438, descrambles the received program data based on security information stored in an IC card as inserted into a slot of an IC card section 450. In addition, as shown in Fig. 4, the television receiver 401 transmits a transport stream (referred to a TS hereinafter) including the descrambled program data (including a digital video signal, a digital audio signal, program information, and the like) to the DVD recorder 501 in response to a channel select command and a TS output request command as transmitted from the DVD recorder 501. On the other hand, the DVD recorder 501 receives the descrambled TS and records the received descrambled TS in a DVD disc. In the present preferred embodiment, it is assumed that a normal IC card which stores the security information such as identification information, a terminal ID, a user name, a user ID, a password, and scrambling key information or the like has been already inserted into the IC card section 450 of the television receiver 401. It is also assumed that no normal IC card is inserted into a slot of an IC card section 549 of the DVD recorder 501. In this case, the "normal IC card" means a CA module for which the user concludes an agreement with a broadcasting company and which can descramble program data owned by the user. As for the descrambled program data, a program stream may be used in place of the transport stream.

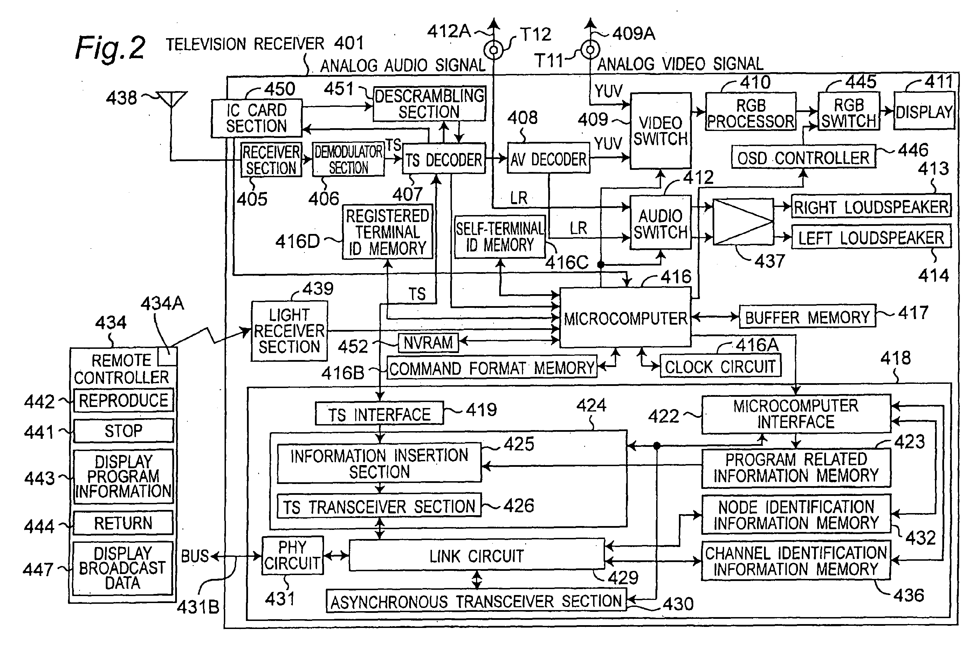

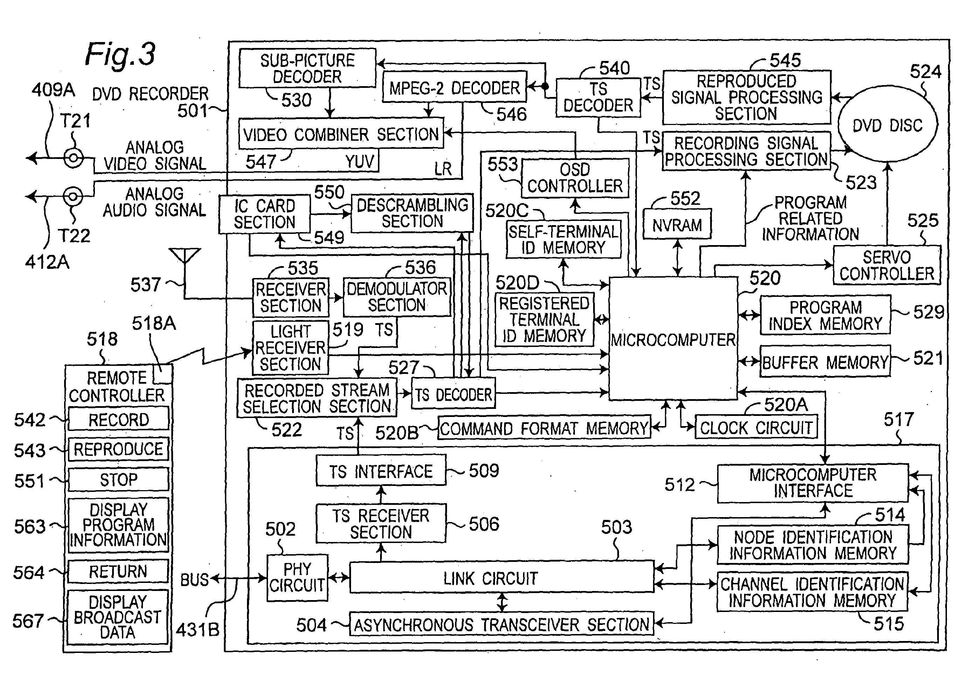

Referring to Figs. 2 and 3, the detailed configurations of the television receiver 401 and the DVD recorder 401 will be described hereinafter.

Fig. 2 is a block diagram showing a detailed configuration of the television receiver 401 shown in Fig. 1. Referring to Fig. 2, the radio signal on the digital television broadcasting wave is received by the antenna 439 such as a parabola antenna or the like, and is inputted to a receiver section 405. The receiver section 405 executes processings such as high-frequency amplification, frequency conversion, and a channel select processing or the like to the input radio signal, and outputs an intermediate frequency signal after the frequency conversion to a demodulator section 406. The radio signal or the intermediate frequency signal is a demodulated signal obtained by modulating a carrier signal according to a TS as specified by, for example, MPEG-2 (Motion Picture Expert Group-2), and by multiplexing a digital video signal, a digital audio signal, program data and the like. The demodulator section 406 demodulates the input intermediate frequency signal into a digital signal TS according to a predetermined demodulation method, and outputs the demodulated signal TS to a TS decoder 407.

When the program data on the digital television broadcasting as received by the antenna 438 is to be recorded in the DVD recorder 501, the TS decoder 407 subjects the TS as inputted from the demodulator section 406 to packet filtering, and then, outputs the TS including the digital video signal, the digital audio signal, broadcasting data, and program table data (which is data including summary information on program names, program dates, and program contents of a plurality of programs) to the DVD recorder 501 through an AV decoder 408, a video switch 409 and an audio switch 412, and input and output terminals T11 and T12. As described later, the TS is descrambled by the IC card section 450 and a descrambling section 451, and is outputted to the DVD recorder 501 through the bus wiring 431B using an interface LSI 418. Further, when the digital television broadcasting program as received by the antenna 438 is to be viewed and listened to by the user using a display 411 and loudspeakers 413 and 414, the TS decoder 407 subjects the TS as inputted from the demodulator section 406 to packet filtering, and extracts data stored in a packet, that is, extracts an elementary stream of the digital video signal and the digital audio signal, BML (Broadcasting Makeup Language) data on the broadcasting data, and the program table data under control of a microcomputer 416. In addition, the TS decoder 407 outputs the extracted elementary stream to the display 411 such as a liquid crystal display, a CRT display or the like, through the AV decoder 408, the video switch 409, an RGB processor 410, and an RGB switch 445 so as to display images of the elementary stream, and outputs the BML data and the program table data to the microcomputer 416.

When the TS as inputted to the TS decoder 407 is scrambled due to a pay broadcasting program or the like, the TS decoder 407 extracts scrambling key information for generating a demodulation key which descrambles the scrambled TS, and outputs the extracted scrambling key information to the IC card section 450 which includes the slot into which the IC card that stores the predetermined security information is inserted. (The scrambling information is information on an ECM (Entitlement Control Message, also referred to as common information) transmitted and received while being contained in the broadcasting wave to annex each program depending on a setting of agreement conditions for the program such as conditions for a flat agreement, a series agreement, or a PPV (Pay Per View) agreement according to digital broadcasting in Japan. It is noted that an agreement content of each subscriber is transmitted and received using an EMM (Entitlement Management Message, also referred to as individual information.) The IC card section 450 checks a purchase status or an agreement status of a designated program based on the input scrambling key information, generates decoding key information (key information for descrambling) decrypted using master key information stored in the IC card as inserted into the slot of the IC card section 450, and outputs the generated decoding key information to the descrambling section 451. In addition, the IC card section 450 outputs an IC card's inserted/detached state to the microcomputer 416. The descrambling section 451 descrambles the scrambled TS as inputted from the TS decoder 407 using the decoding key information thus decrypted, and outputs the descrambled TS back to the TS decoder 407. In this case, the IC card section 450 outputs the IC card's inserted/detached state as well as the identification information as stored in the IC card, and the purchase status or agreement status of the designated program to the microcomputer 416 through the descrambling section 451 and the TS decoder 407 as information for judging whether or not the designated program data to be viewed can be descrambled.

The AV decoder 408 executes a decoding processing based on a broadcasting standard such as MPEG-2 or the like, to the elementary stream as inputted from the TS decoder 407 and including the digital video signal and the digital audio signal, and generates an analog video signal and an analog audio signal. The AV decoder 408 outputs the analog video signal to the video switch 409, and outputs the analog audio signal to the audio switch 412. Further, when the broadcast data as received by the antenna 438 is to be displayed, the AV decoder 408 executes a scaling processing to the video signal at a reduction ratio or an enlargement ratio designated by a data broadcasting definition file, generates an effective sound based on the broadcasting data, and combines the effective sound with the audio signal. The analog video signal from the AV decoder 408 is, for example, an analog YUV signal (including a luminance signal Y, Y - R = U signal, and Y - B = V signal), whereas the analog audio signal from the AV decoder 408 is, for example, an analog right audio signal and an analog left audio signal.

The video switch 409 selectively switches over between the analog video signal as inputted from the DVD recorder 501 through the input and output terminal T11 and the analog video signal as inputted from the AV decoder 408 under control of the microcomputer 416, and outputs the selected signal to the RGB processor 410. The RGB processor 410 converts the analog video signal as outputted from the video switch 409 into RGB signals having a signal level suitable to be displayed on the display 411 and being in synchronization with a synchronization signal as outputted from a synchronization control circuit of the display 411, and outputs the RGB signals to the display 411 through the RGB switch 445. An OS (On Screen Display) controller 446 reads out image data on drawn program related information, on a program table, on a data broadcasting screen, and on a GUI (Graphic User Interface) screen stored in a buffer memory 417 from the buffer memory 417, converts the image data into RGB signals having a signal level suitable to be displayed on the display 411, and being in synchronization with a synchronization signal as outputted from the synchronization control circuit of the display 411, and outputs the RGB signals to the display 411 through the RGB switch 445 under control of the microcomputer 416. The RGB switch 445 combines the RGB signals from the RGB processor 410 with those from the OSD controller 446 or selectively switches over between them, outputs the resultant RGB signals to the display 411, and displays the RGB signals on the display 411.

The audio switch 412 combines the analog audio signal as inputted from the input and output terminal T12 from the DVD recorder 501 with the analog audio signal as outputted from the AV decoder 408 or selectively switches over between them, and outputs the resultant signal to the left and right loudspeakers 414 and 413 through an audio amplifier 437 under control of the microcomputer 416.

A remote controller 434 is a controller that allows the user to remotely control operations of the television receiver 401. The remote controller 434 includes various kinds of input keys 441 to 444 and 447, and a signal transmitter section 434A which modulates, for example, an infrared signal according to indication information as inputted from one input key, and which transmits the modulated infrared signal to a light receiver section 439 of the television receiver 401. The input keys include the REPRODUCE key 442 for indicating to reproduce the program data recorded in the DVD disc 524 as installed in the DVD recorder 501, the STOP key 441 for indicating to stop reproducing data, the PROGRAM INFORMATION DISPLAY key 443 for indicating to display program information related to a program which is being reproduced or viewed, the RETURN key 444 for indicating to return to a state before an operation, the BROADCAST DATA DISPLAY key 447 for indicating to display data content of the broadcasting data as transmitted via the digital television broadcasting wave, a crisscross key, and the like. The infrared signal as transmitted from the signal transmitter section 434A of the remote controller 434 is received by the light receiver section 439 of the television receiver 401. The light receiver section 439 converts the received infrared signal into an electric signal by optical-to-electric conversion, amplifies and demodulates the signal to extract indication information data, and outputs the data to the microcomputer 416.

The microcomputer 416 controls the respective components of the television receiver 401. In addition, the microcomputer 416 decrypts the contents of the data broadcasting BML data and program table data as inputted from the receiver section 405 through the demodulator section 406 and the TS decoder 407 based on the data broadcasting BML data and program table data, and constructs and draws a broadcast data screen using the buffer memory 417 or generates image data and outputs the image data to the OSD controller 446 by drawing the program table and the program related information. A clock circuit 416A which calculates a present date, a nonvolatile random access memory (referred to as an NVRAM hereinafter) which stores scores, the right, and the like which the user acquires by a data broadcasting game or quiz show, a command format memory 416B which stores various kinds of command formats used when the television receiver 410 communicates with an apparatus connected to the receiver 410 using various kinds of commands through the bus wiring 431B, a self-terminal ID memory 416C which stores a self-terminal ID which is a terminal ID of the television receiver 401 itself, and a registered terminal ID 416D which registers and stores a terminal ID of an apparatus to be authenticated using the terminal ID among connected apparatuses connected onto the bus wiring 431B are connected to the microcomputer 416. The self-terminal ID may be written to the television receiver 401 during manufacturing of the television receiver 401. The registered terminal ID may be registered by user's inputting the terminal ID using an input apparatus (not shown) or by microcomputer 416's acquiring the terminal ID's of the apparatuses connected on the bus wiring 431B through an asynchronous transceiver section 430 as described later. It is noted that the microcomputer 416 is controlled so that the user can read out and use the scores or the right stored in the NVRAM 452 when the user views the program next time.

The interface LSI 418 is a communication interface circuit which executes a serial communication with each connected apparatus through the bus wiring 431B, and includes various kinds of component circuits 419, 422, 423, 424, 432, 436, 429, 430 and 431. The PHY circuit 431 is a physical layer interface circuit connected to the bus wiring 431B and in conformity to, for example, IEEE1394. The PHY circuit 431 converts the TS, the command signal or the like as outputted from a LINK circuit 429 into a bus wiring signal, outputs the bus wiring signal to the connected apparatus such as the DVD recorder 501 or the like through the bus wiring 431B. In addition, the PHY circuit 431 receives the command signal or the like as transmitted from the connected apparatus through the bus wiring 431B, converts the received signal into an in-circuit signal, and outputs the same signal to the LINK circuit 429. The TS interface 419 converts a compressed TS packet signal as outputted from the TS decoder 407 and in conformity to, for example, MPEG-2 into a packet signal of, for example, the elementary stream of the video signal and the audio signal or a packet signal which stores the data broadcasting BML data and program related information in a TS format, and outputs the packet signal to an information insertion section 425 of a synchronous transceiver section 424

The synchronous transceiver section 424 is constituted by including the information insertion section 425 and a TS transceiver section 426, and transmits and receives a synchronous packet signal in synchronization with a timing of a received cycle start packet signal. The synchronous transceiver section 425 includes a protocol for adding synchronous packet header including a channel for ensuring a band and data for ensuring continuity to the transmitted data, or for deleting the synchronous packet header from received data. This protocol is normally referred to as an isochronous protocol. The information insertion section 425 converts transmitting data which is program related information stored in the program related information memory 423 into the packet signal in the TS format, superimposes the resultant packet signal on the TS as inputted from the TS interface 419, and outputs the superimposed signal to the TS transceiver section 426. As a superimposition method, for example, there is used a method for regularly reading out the program related information from the program related information memory 423, and for inserting the read-out information into a gap of the input TS. Further, the TS transceiver section 426 adds the synchronous packet header to the superimposed TS packet signal as outputted from the information insertion section 425, converts the resultant signal into a synchronous packet signal, and outputs the synchronous packet signal to the LINK circuit 429 during transmission.

The microcomputer interface 422 is connected to the microcomputer 416 so as to control the respective component circuits of the interface LSI 418, and receives the data as transmitted in a format of an asynchronous packet signal under control of the microcomputer 416. It is noted that the program related information is information related to programs recorded or reproduced such as additional information on a title, an outline or summary, performers and the like. These pieces of additional information can be generated by extracting information on a corresponding program from the program table information. The program related information memory 423 stores the program related information as inputted from the microcomputer interface 422. The node identification information memory 432 stores a node number for allowing the connected apparatuses connected onto the bus wiring 431B to identify the television receiver 401, and a node number of the DVD recorder 501 connected to the bus wiring 431B. The channel identification information memory 436 stores information for identifying a transmission channel logically secured between the television receiver 401 and the DVD recorder 501 on the bus wiring 431B.

During transmission, the asynchronous transceiver section 430 generates an asynchronous packet signal which stores the data as inputted from the microcomputer interface 422, and outputs the generated signal to the LINK circuit 429 in asynchronization with the cycle start packet under control of the microcomputer 416. During reception, the asynchronous transceiver section 430 receives the asynchronous packet signal from the LINK circuit 429, and outputs the received signal to the microcomputer interface 422. Further, the asynchronous transceiver section 430 includes a protocol for adding the asynchronous packet header including addresses of a transmission destination node and a self-terminal node and the like to the transmitted data and transmitting the resultant as transmitted data under control of the microcomputer 416 during transmission, and for deleting the asynchronous packet header and outputting the received signal during reception. This protocol is normally referred to as an asynchronous protocol hereinafter. The LINK circuit 429 converts the transmitted packet signal from the synchronous transceiver section 424 and the asynchronous transceiver section 430 into data adapted to the PHY circuit 431, and outputs the data to the PHY circuit 431 during reception. In addition, the LINK circuit 429 converts the input data from the PHY circuit 431 into data adapted to the synchronous transceiver section 424 and the asynchronous transceiver 430, and outputs the data to the synchronous transceiver section 424 and the asynchronous transceiver section 430.

In the present preferred embodiment, the node number of each connected apparatus connected to the bus wiring 431B can be received from the asynchronous transceiver section 430 or the like during configuration of the bus wiring 431B. The microcomputer 416 can read out and recognize the self-node number of the television receiver 401 and the node number of the DVD recorder 501 or the like. It is noted that the association information on association among the television receiver 401 and the DVD recorder 501 connected to the bus wiring 431B and the node numbers can be acquired, as information that indicates attributes of the connected apparatuses, from respective nodes through the asynchronous transceiver section 430 under control of the microcomputer 416. For example, when the synchronous packet signal including the TS is to be transmitted using the TS transceiver section 426 of the interface LSI 418, a channel number for securing a logical channel between the nodes is allocated during transmission of each synchronous packet according to the isochronous protocol. Due to this, the microcomputer 416 can recognize the channel number secured between the television receiver 401 and the DVD recorder 501, the node identification information is stored in the node identification information memory 432, and the channel identification information is stored in the channel identification information memory 436.

Alternatively, the PHY circuit 431 in conformity to the IEEE1394 may be replaced by a circuit in conformity to, for example, USB (Universal Serial Bus) or IEEE802.3. Furthermore, a circuit in conformity to IEEE802.11 or UWB (Ultra Wideband) may be used.

Fig. 3 is a block diagram showing a detailed configuration of the DVD recorder 501 shown in Fig. 1.

Referring to Fig. 3, the digital television broadcasting wave is received by an antenna 537 such as a parabola antenna or the like, and then, it is inputted to a receiver section 535. The receiver section 535 executes processings such as high-frequency amplification, frequency conversion, and a channel select processing or the like to the input radio signal, and outputs an intermediate frequency signal after the frequency conversion to a demodulator section 536. The radio signal or the intermediate frequency signal is a demodulated signal obtained by modulating a carrier signal according to a TS in which a digital video signal, a digital audio signal, program data and the like are multiplexed and which is conformity to, for example, MPEG-2. The demodulator section 536 demodulates the input intermediate frequency signal into a digital signal TS according to a predetermined demodulation method, and outputs the demodulated signal TS to a TS decoder 527 through a recorded stream selection section 522. The recorded stream selection section 522 selectively switches over between the TS from the demodulator section 536 and the TS from a TS interface 509, and outputs the selected TS to the TS decoder 527.

When the program data on the digital television broadcasting wave as received by the antenna 537 is to be recorded in the DVD recorder 501, the TS decoder 527 inputs the TS from the demodulator section 536 through the recorded stream selection section 522, subjects, the TS to packet filtering and extracts data from the TS under control of a microcomputer 520, and outputs the TS including the video signal, the digital audio signal, and data broadcasting BML data as well as the program table data to a recording signal processing section 523. At this time, the TS decoder 527 extracts the program related information related to recorded programs from the program table data under control of the microcomputer 520, generates a TS packet signal including the program related information, and outputs the generated TS packet signal to the recording signal processing section 523. On the other hand, when the TS as transmitted from the televise receiver 401 through the bus wiring 431B and including the video signal, the audio signal, the broadcast data or the program related information on the recorded program is to be received, the TS is received from the TS interface 509 of the interface LSI 517 through the recorded stream selection section 522. The TS is subjected to packet filtering, and extraction of the data included in a packet, a packet signal of the TS including the elementary stream of the video and audio, the data broadcasting BML data and the program related information is generated, and the generated data is outputted to the recording signal processing section 523.

When the TS as inputted to the TS decoder 527 is scrambled due to a pay broadcasting program or the like, the TS decoder 527 extracts scrambling key information for generating a demodulation key which descrambles the scrambled TS, and outputs the extracted scrambling key information to the IC card section 549 which includes the slot into which the IC card that stores the predetermined security information is inserted. The IC card section 549 generates decoding key information (key information for descrambling) decrypted using master key information stored in the IC card as inserted into the slot of the IC card section 540, and outputs the generated decoding key information to a descrambling section 550. In addition, the IC card section 549 outputs an IC card's inserted/detached state to the microcomputer 520. In the present preferred embodiment, it is assumed that no normal IC card is inserted into the slot of the IC card section 549. In this case, such a case that "no normal IC card is inserted into the slot of the IC card section 549" means such a case that no IC card is inserted or an instance in which, even if an IC card is inserted, the IC card is not an IC card with which the program data can be descrambled and which is owned by the user who concludes an agreement with a broadcasting company. The descrambling section 550 descrambles the scrambled TS as inputted from the TS decoder 527 using the decoding key information thus decrypted, and outputs the descrambled TS back to the TS decoder 527.

The recording signal processing section 523 is constituted by including a scrambler circuit, a demodulator circuit, a laser, and the like for recording digital data in the DVD disc 524. The recording signal processing section 523 receives recording TS from the TS decoder 527, and records the received recording TS in the DVD disc 524 under control of the microcomputer 520. A servo controller 525 executes servo control over a motor for the DVD disc 524, and executes rotation control over the disc 524 as well as tracking and the like to the disc 524 under control of the microcomputer 520. The DVD disc 524 is, for example, a DVD disc employing a blue laser.

A remote controller 518 is a controller that allows the user to remotely control operations of the DVD recorder 501. The remote controller 518 includes various kinds of input keys 542, 543, 551, 563, 564 and 567, and a signal transmitter section 518A which modulates, for example, an infrared signal according to indication information as inputted from one input key, and which transmits the modulated infrared signal to a light receiver section 519 of the DVD recorder 501. The input keys include the RECORD key 542 for indicating to record the recording TS on the DVD disc 524 installed in the DVD recorder 501, the REPRODUCE key 543 for indicating to reproduce the TS recorded on the DVD disc 524, the STOP key 551 for indicating to stop recording or reproducing the TS, the PROGRAM INFORMATION DISPLAY key 563 for indicating to display program information related to a program which is being recorded, reproduced, or viewed, the RETURN key 564 for indicating to return to a state before an operation, the BROADCASTING DATA DISPLAY key 567 for indicating to display a data content of the broadcasting data as transmitted via the digital television broadcasting wave, a crisscross key for operating a data broadcasting screen, and the like. The infrared signal as transmitted from the signal transmitter section 518A of the remote controller 518 is received by the light receiver section 519 in the DVD recorder 501. The light receiver section 519 converts the received infrared signal into an electric signal by optical-to-electric conversion, amplifies and demodulates the signal to extract indication information data, and outputs the data to the microcomputer 520.

The microcomputer 520 controls the respective components of the DVD recorder 501, and controls a file system of the DVD disc 524. In addition, the microcomputer 520 decodes the contents of the data broadcasting BML data and program table data as inputted from the receiver section 535 through the demodulator section 536, the recorded stream selection section 522, and the TS decoder 527 based on the data broadcasting BML data and program table data, and constructs and draws a data broadcasting screen using a buffer memory 521 or generates image data and outputs the image data to an OSD controller 553 by drawing the program table and the program related information. A clock circuit 520A which calculates a present date, an NVRAM 520 which stores scores, the right, and the like which the user acquires by a data broadcasting game or quiz show, a command format memory 520B which previously stores various kinds of command formats used when the DVD recorder 501 communicates with connected apparatuses using various kinds of commands through the bus wiring 431B, a self-terminal ID memory 520C which stores a self-terminal ID which is a terminal ID of the DVD recorder 501 itself, a registered terminal ID 520D which registers and stores a terminal ID of an apparatus to be authenticated using the terminal ID among those connected onto the bus wiring 431B, and a program index memory 529 which stores information for associating the program data recorded in the DVD disc 524 with information on a recorded position on the DVD disc 524 under control of the microcomputer 520 are connected to the microcomputer 520. The self-terminal ID is written to the DVD recorder 501 during manufacturing of the DVD recorder 501. The registered terminal ID is registered by user's inputting the terminal ID using an input apparatus (not shown) or by microcomputer 520's acquiring the terminal ID's of the apparatuses connected onto the bus wiring 431B through an asynchronous transceiver section 504 as described later. It is noted that the microcomputer 520 is controlled so that the user can read out and use the scores or the right stored in the NVRAM 552 when the user views the program next time.

The reproduced signal processing section 545 is constituted by including a pickup, a demodulator circuit, a scrambler circuit and the like for reproducing the program data recoded in the DVD disc 524. The reproduced signal processing section 545 reproduces the digital data recorded in the DVD disc 524, converts the reproduced digital data into a TS under control of the microcomputer 520, and outputs the TS to the TS decoder 540. The TS decoder 540 subjects the TS as inputted from the reproduced signal processing section 545 to packet filtering and extraction of data stored in a packet under control of the microcomputer 520, and outputs an elementary stream of the video signal and the audio signal or sub-picture data to an MPEG-2 decoder 546 or a sub-picture decoder 530, respectively. The TS decoder 540 outputs the data broadcasting BML data and the program related information included in the reproduced TS to the microcomputer 520. The MPEG-2 decoder 546 receives the elementary stream of the video signal and the audio signal as outputted from the TS decoder 540, subjects the received elementary stream to a MPEG-2 decoding processing to convert the digital video signal and the digital audio signal into the analog video signal and the analog audio signal, and outputs the analog video signal and the analog audio signal. In addition, when broadcasting data is to be displayed, the MPEG-2 decoder 546 executes a scaling processing to the analog video signal at a reduction ratio and an enlargement ratio designated by a data broadcasting definition file, generates an effective sound, and executes a combining processing to combine the generated effective sound with the audio. The analog video signal generated by the MPEG-2 decoder 546 is, for example, an analog YUV signal, and the analog audio signal generated by the MPEG-2 decoder 546 is, for example, left and right audio signals. Further, the sub-picture decoder 530 converts sub-picture data as inputted from the TS decoder 540 into an analog YUV signal and outputs the analog YUV signal to a video combiner section 547 under control of the microcomputer 520.

The OSD controller 553 converts image data on the program related information, the program table, and the broadcasting data screen or image data on a GUI screen drawn in the buffer memory 521 into an analog YUV signal under control of the microcomputer 520. In addition, the OSD controller 553 makes the resultant analog YUV signal being in synchronization with a synchronization signal as outputted from a synchronization generator circuit included in the OSD controller 553, and outputs the synchronized signal. This synchronization signal is also outputted to the MPEG-2 decoder 546 and the sub-picture decoder 530, so that the analog YUV signal is synchronized with the synchronization signal. The video combiner section 547 receives the analog YUV signals from the MPEG-2 decoder 546, the sub-picture decoder 530, and the OSD controller 553, combines the received analog YUV signals under control of the microcomputer 520 exercised through the OSD controller 553, and outputs a combined analog YUV signal. The analog YUV signal as outputted from the video combiner section 546 and the analog audio signal as outputted from the MPEG-2 decoder 546 are outputted to the television receiver 401 through input and output terminals T21 and T22, respectively.

An interface LSI 517 is constituted in a manner similar to that of the interface LSI 418 of the television receiver 401 except for the following differences:
(1) The interface LSI 517 does not include any program related information memory 423 and the information insertion section 425.
(2) The interface LSI 517 includes a TS receiver section 506 which only receives the TS in place of the TS transceiver section 426. Therefore, the synchronous transceiver section 424 includes only the TS receiver section 506.
(3) The other component circuits such as a TS interface 509, a LINK circuit 504, a PHY circuit 502, a microcomputer interface 512, a node identification information memory 514, and a channel identification information memory 515 are constituted in a manner similar to those of the TS interface 419, the LINK circuit 429, the PHY circuit 431, the microcomputer interface 422, the node identification information memory 432, and the channel identification information memory 436 shown in Fig. 2, respectively.

It is noted that the TS as received by the PHY circuit 502 is outputted to the TS decoder 527 through the LINK circuit 503, the TS receiver section 506, the TS interface 509, and the recorded stream selection section 522. Further, for the program data descrambled by the television receiver 401, a program stream may be received in place of the transport stream, and the program stream may be recorded in the DVD disc 524.

Fig. 4 is a sequence diagram showing communication procedures for transmitting and receiving a descrambled transport stream signal (referred to a TS hereinafter) between the television receiver 401 and the DVD recorder 501 shown in Fig. 1. In Fig. 4, it is assumed that the normal IC card is inserted into the television receiver 401 and that no normal IC card is inserted into the DVD recorder 501.

Referring to Fig. 4, the DVD recorder 501 transmits a normal IC card's inserted/detached state notification request command accompanied by IC card identification information to the television receiver 401. In response to the command, the television receiver 401 transmits an IC card's inserted/detached state notification command which indicates that the normal IC card is inserted into the DVD recorder 501. At this time, the DVD recorder 501 transmits a channel select command and a TS output request command to request that a program be designated and that program data on the program be outputted to the television receiver 401. In response to the commands, the television receiver 401 descrambles the scrambled program data as received by the antenna 438, generates a descrambled TS, and outputs the descrambled TS to the DVD recorder 501. In response to this, the DVD recorder 501 records the received T on the DVD disc 524 and transmits a recording end command to the television receiver 401 when completing recording, thus finishing the communication procedures.

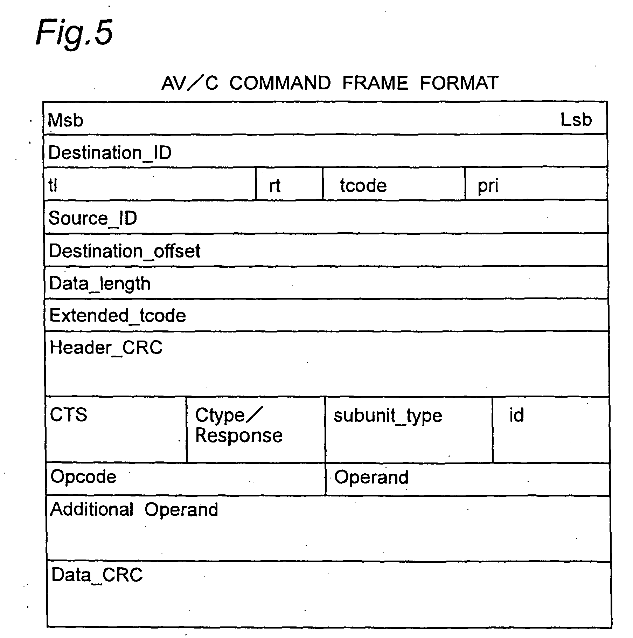

Fig. 5 is a diagram showing a format of an AV/C command for transmitting a command signal under the communication procedures between the television receiver 401 and the DVD recorder 501 shown in Fig. 1.

Referring to Fig. 5 and the following drawings, Msb denotes the most significant bit (MSB), and Lsb denotes the least significant bit (LSB). As shown in Fig. 5, the communication procedures are executed using a format of an AV/C command frame within an FCP (Function Control Protocol) frame as transformed into a packet signal according to a asynchronous block write transaction in conformity to IEEE1394. As this AV/C command frame, not only header information such as a destination ID (Destination_ID), a source ID (Source_ID), and a data length (Data_length) or the like but also a control type or a response type (Ctype/Response) and control indication information (Opcode, Operand, Additional Operand) are transmitted. As the control type or response type (Ctype/Response), for example, a value of zero is inserted when a command is "Control", a value of nine is inserted when the command is "Reception Response", and a value of Ah is inserted when the command is "Not Authentication". As for the control indication information (Opcode, Operand, Additional Command), for example, the control indication information is transmitted while inserting command information including information for designating a program into the control indication information.

It is noted that similar asynchronous packets are defined in IEEE802.3 and IEC802.11. Therefore, a command signal in conformity to one of these standards may be transmitted in the present preferred embodiment. Concretely, the command signal may be transmitted using a TCP as specified by RFC793 which is a higher-order protocol of IEEE802.3 or IEC802.11.

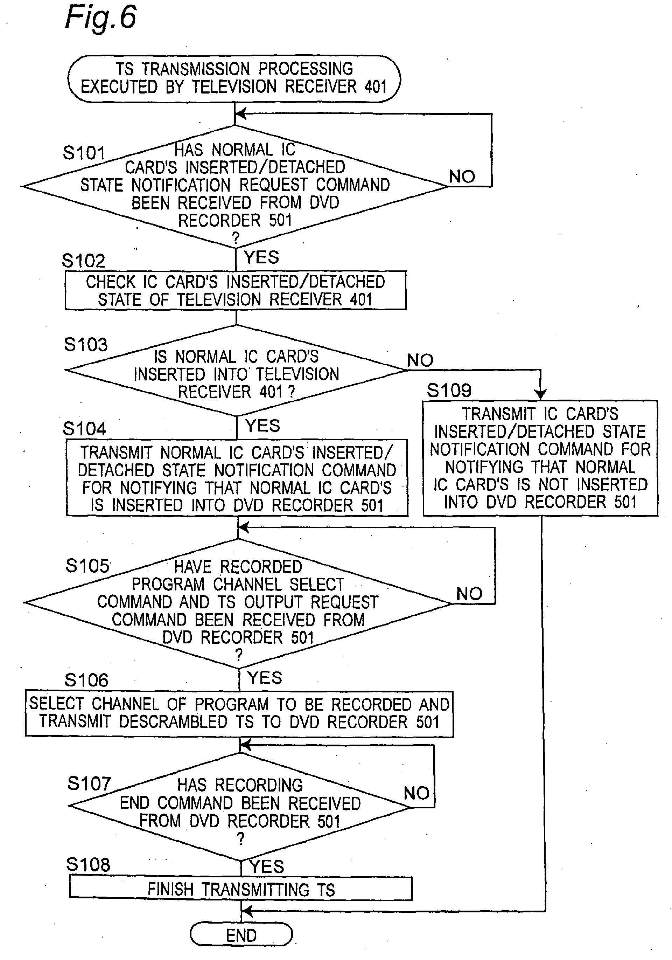

Fig. 6 is a flowchart showing a TS transmission processing executed by the television receiver 401 shown in Fig. 2.

Referring to Fig. 6, at step S101, it is judged whether or not the normal IC card's inserted/detached state notification request command has been received from the DVD recorder 501. The processing of step S101 is repeated until the judgment result of step S101 becomes YES. If YES at step S101, an IC card's inserted/detached state of the television receiver 401 (which is a state indicating whether or not a normal IC card is inserted into the slot of the IC card section 450) is checked at step S102. At step S103, it is judged whether or not the normal IC card is inserted into the television receiver 401. If YES at step S103, the processing flow goes to step S 104. On the other hand, if No at step S103, the processing flow goes to step S 109. At step S 109, the television receiver 401 transmits the normal IC card's inserted/detached state notification command for notifying that no normal IC card is inserted into the DVD recorder 501, and then finishes the TS transmission processing.

At step S 104, the television receiver 401 transmit the normal IC card's inserted/detached state notification command for notifying that the normal IC card is inserted into the television receiver 401 to the DVD recorder 501. At step S105, it is judged whether or not a recorded program channel select command and a TS output request command have been received from the DVD recorder 501. The processing of step S105 is repeated until the judgment result of step S105 becomes YES before a predetermined timeout. If YES at step S105, the processing flow goes to step S106. At step S106, the television receiver 401 selects a channel of a program to be recorded, and transmits the descrambled TS to the DVD recorder 501. At step S 107, it is judged whether or not the television receiver 401 has received the recording end command from the DVD recorder 501. The processing of step S 107 is repeated until the judgment result of step S107 becomes YES. If YES at step S107, the processing flow goes to step S 108. At step S 108, the television receiver 401 finishes transmitting the TS, and then finishes the TS transmission processing.

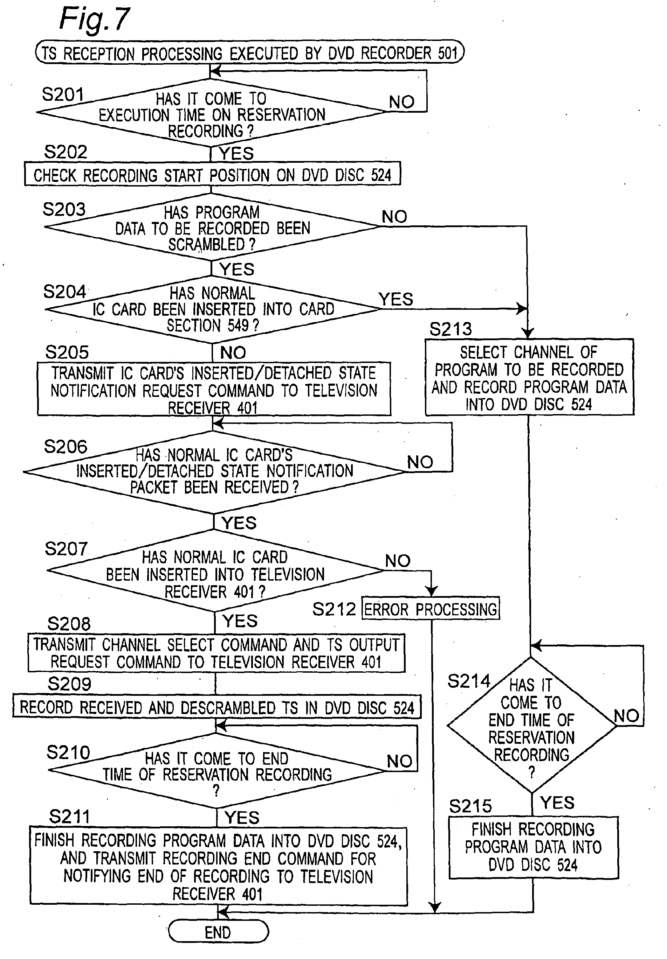

Fig. 7 is a flowchart showing a TS reception processing executed by the DVD recorder 501 shown in Fig. 3.

Referring to Fig. 7, at step S201, it is judged whether or not it has come to the execution time on the reservation recording. The processing of step S201 is repeated until the judgment result of step S201 becomes YES. If YES at step S201, the processing flow goes to step S202. At step S202, the DVD recorder 501 checks a recording start position on the DVD disc 524. At step S203, it is judged whether or not the program data to be viewed has been scrambled. If YES at step S203, the processing flow goes to step S204. On the other hand, if No at step S203, the processing flow goes to step S213. The judgment as to whether or not program data to be recorded is scrambled at step S203 can be made by checking the contents of the program related information on the program or by checking header information on the TS. At step S204, it is judged whether or not the normal IC card has been inserted into the slot of the card section 549. If YES at step S204, the processing flow goes to the step S213. On the other hand, if No at step S204, the processing flow goes to step S205.

At step S213, the user selects a channel of the program to be recorded, and then, the DVD recorder 501 records the program data into the DVD disc 524. At step S214, it is judged whether or not it has come to the end time of the reservation recording. The processing of step S214 is repeated until the judgment result of step S214 becomes YES. If YES at step S214, the DVD recorder 501 finishes recording the program data on the DVD disc 524, and then finishes the TS reception processing.

At step S205, the DVD recorder 501 transmits the normal IC card's inserted/detached state notification request command accompanied by IC card identification information to the television receiver 401. At step S206; it is judged whether or not the normal IC card's inserted/detached state notification packet has been received. The processing of step S206 is repeated until the judgment result of step S206 becomes YES before a predetermined timeout. If YES at step S206, the processing flow goes to step S207. The IC card identification information can be checked by checking the contents of the program related information on the program of program specific information according to the MPEG-2 standard. At step S207, it is judged whether or not the normal IC card has been inserted into the television receiver 401. If YES at step S207, the processing flow goes to step S208. On the other hand, if No at step S207, the processing flow goes to step S212. At step S212, the DVD recorder 501 performs an error processing, and then finishes the TS reception processing.

At step S208, the DVD receiver 501 transmits a channel select command and a TS output request command to the television receiver 401. At step S209, the DVD recorder 501 records the received and descrambled TS in the DVD disc 524. At step S210, it is judged whether or not it has come to the end time of the reservation recording. The processing of step S210 is repeated until the judgment result of step S210 becomes YES. If YES at step S210, the processing flow goes to step S211. At step S211, the DVD recorder 501 finishes recording of the program data into the DVD disc 524, transmits a recording end command for notifying end of recording to the television receiver 401, and finishes the TS reception processing.

As described above, according to the first preferred embodiment, the television receiver 401 and the DVD recorder 501 are connected to each other through the bus wiring 431B using the digital bus signal. Even if no normal IC card is inserted into the IC card section 549 of the DVD recorder 501, it suffices that the normal IC card is inserted into the IC card section 450 of the television receiver 401. In this case, as shown in Fig. 4, after checking the normal IC card's inserted/detached state of the television receiver 401 using the normal IC card's inserted/detached state notification request command and the normal IC card's inserted/detached state notification command that is a response signal to the normal IC card's inserted/detached state notification request command, the DVD recorder 501 transmits the channel select command and the TS output request command for requesting the television receiver 401 to designate a program and output program data on the program, to the television receiver 401. In response to these commands, the television receiver 401 descrambles the scrambled program data, and outputs the descrambled program data to the DVD recorder 501 through the bus wiring 431B. Therefore, the DVD recorder 501 can record the program data as received by the television receiver 401 on the DVD disc 524.

Further, even if the IC card section and the descrambling section are a single CA module circuit in the television receiver 401, the program data communication system according to the present preferred embodiment can be carried out. Besides, by connecting and adding the television receiver 401 to the DVD recorder 501, the DVD recorder 501 searches the connected apparatus on the bus wiring 431B. In addition, the television receiver 401 is allowed to execute the descrambling processing, and this leads to that the DVD recorder 501 can acquire the descrambled program data through the bus wiring 431B. Additionally, the descrambling function can be added without any changing of the channel select method of the DVD recorder 501.

### SECOND PREFERRED EMBODIMENT

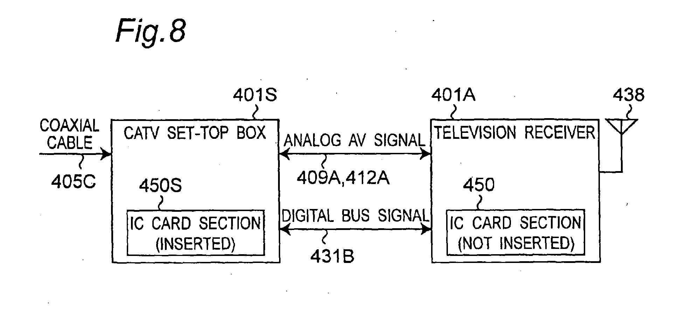

Fig. 8 is a block diagram showing configuration of a program data communication system according to a second preferred embodiment of the present invention.

Referring to Fig. 8, the program data communication system according to the second embodiment is constituted by including a CATV set-top box 401S which receives, demodulates, and outputs CATV program data, and a television receiver 401A which receives and displays program data on a digital television broadcasting wave, which receives the program data from the CATV set-top box 401S, and which displays the program data. The two apparatuses 401S and 401A are connected to each other through a bus wiring 431B for transmitting and receiving digital bus signals including various kinds of commands and an AV signal of the program data as received and then descrambled by the CATV set-top box 401S. In addition, the two apparatuses 401S and 401A are connected to each other through an analog video signal cable 409A and an analog audio signal cable 412A for transmitting the analog AV signal as received by the CATV set-top box 401S to the television receiver 401A, and for displaying the AV signal by the television receiver 401A.

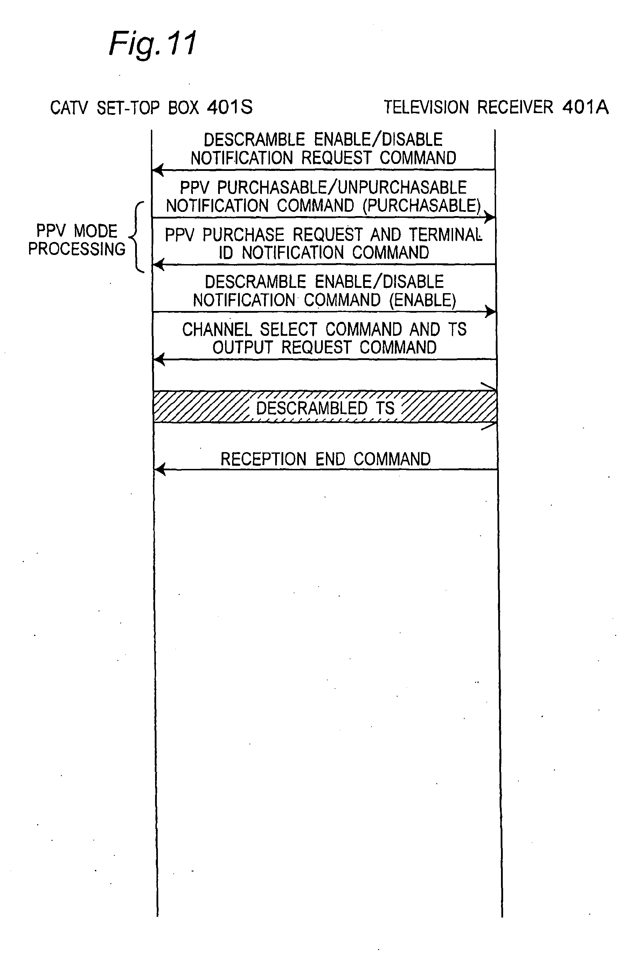

The CATV set-top box 401S according to the present preferred embodiment receives CATV program data through a coaxial cable 405C, descrambles the received program data based on security information stored in an IC card as inserted into a slot of an IC card section 450S. In addition, as shown in Fig. 11, the CATV set-top box 401S transmits a TS including the descrambled program data (including a digital video signal, a digital audio signal, program information, and the like) to the television receiver 401A in response to a channel select command and a TS output request command as transmitted from the television receiver 401A. On the other hand, the television receiver 401A receives, displays, and outputs the AV signal of the received TS. In the present preferred embodiment, it is assumed that a normal IC card which stores the security information such as identification information, a terminal ID, a user name, a user ID, a password, and scrambling key information or the like has been already inserted into the IC card section 450S of the CATV set-top box 401. It is also assumed that no normal IC card is inserted into a slot of an IC card section 450 of the television receiver 401A.

In this case, "the normal IC card" means a CA module for which the user concludes an agreement with a broadcasting company and which can descramble program data owned by the user. As for the descrambled program data, a program stream may be used in place of the transport stream. Further, the CATV set-top box 401S according to the present invention will be described hereinafter with reference to an example in which the set-top box is for CATV. Alternatively, a set-top box which receives television broadcasting programs or programs from the Internet in place of those from a CATV network may be used. The configuration of the program data communication system according to the present invention is characterized in that the receiver and the television receiver are connected to each other.

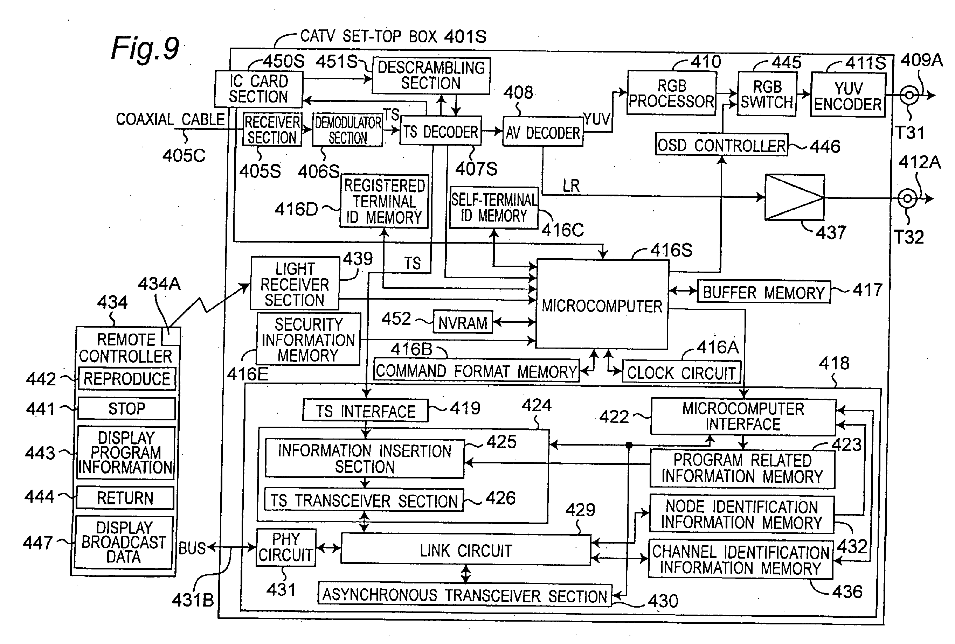

Fig. 9 is a block diagram showing a detailed configuration of the CATV set-top box 401S shown in Fig. 8.

Referring to Fig. 9, the CATV set-top box 401S according to the second preferred embodiment is different from the television receiver 401 shown in Fig. 2 in the following respects:
(1) The CATV set-top box 401S includes a coaxial cable 405C, a receiver section 405S, a demodulator section 406S, an IC card section 450S, a descrambling section 451S, and a TS decoder 407S for receiving a CATV digital television signal in place of the antenna 438, the receiver section 405, the demodulator section 406, the IC card section 450, the descrambling section 451, and the TS decoder 407, respectively.
(2) The CATV set-top box 401S does not include the video switch 409 and the audio switch 412.
(3) The CATV set-top box 401S includes a YUV encoder 411S and an output terminal T31 in place of the display 411.
(4) The CATV set-top box 401S includes an output terminal T32 in place of the left and right loudspeakers 414 and 413.
(5) The CATV set-top box 401S includes a microcomputer 416S in place of the microcomputer 416.

These differences will be described in detail hereinafter.

The CATV digital television signal is transmitted from a head end (not shown), and then, is inputted to the receiver section 405S through the coaxial cable 405S. The receiver section 405S executes processings such as amplification, frequency conversion, and a channel select processing or the like to the input digital television signal, and outputs an intermediate frequency signal after the frequency conversion to the demodulator section 406S. The digital television signal or the intermediate frequency signal is a modulated signal obtained by modulating a carrier signal according to a TS as specified by, for example, MPEG-2, and by multiplexing a digital video signal, a digital audio signal, program data and the like. The demodulator section 406S demodulates the input intermediate frequency signal into a digital signal TS according to a predetermined demodulation method, and outputs the demodulated signal TS to a TS decoder 407S.

When the program data on the CATV digital television signal as received through the coaxial cable 405C is to be outputted to the television receiver 401A, the TS decoder 407S subjects the TS as inputted from the demodulator section 406S to packet filtering, and outputs the TS including the digital video signal, the digital audio signal, broadcasting data, and program table data to the AV decoder 408. The AV decoder 408 converts the input TS into a YUV signal and left and right audio signals, and outputs the YUV signal and the left and right audio signals to the television receiver 401A through an RGB processor 410, an RGB switch 445, a YUV encoder 411S which converts RGB signals into YUV signals, and the output terminal T31. Alternatively, as described later, the TS is descrambled by the IC card section 450S and the descrambling section 451S, and is outputted to the television receiver 401A through the bus wiring 431B using an interface LSI 418.

When the TS as inputted to the TS decoder 407S is scrambled due to a pay broadcasting program or the like, the TS decoder 407S extracts scrambling key information for generating a demodulation key which descrambles the scrambled TS, and outputs the extracted scrambling key information to the IC card section 450S which includes the slot into which the IC card that stores the predetermined security information is inserted. The IC card section 450 generates decoding key information (key information for descrambling) decrypted using master key information stored in the IC card as inserted into the slot of the IC card section 450S, and outputs the generated decoding key information to the descrambling section 451S. In addition, the IC card section 450S outputs an IC card's inserted/detached state to the microcomputer 416. The descrambling section 451S descrambles the scrambled TS as inputted from the TS decoder 407S using the decoding key information thus decrypted, and outputs the descrambled TS back to the TS decoder 407S.

The microcomputer 416S controls the respective components of the CATV set-top box 401S. In addition, the microcomputer 416S decrypts the contents of the data broadcasting BML data and program table data as inputted from the receiver section 405S through the demodulator section 406S and the TS decoder 407S based on the data broadcasting BML data and program table data, and constructs and draws a broadcast data screen using a buffer memory 417 or generates image data and outputs the image data to an OSD controller 446 by drawing the program table and the program related information. It is noted that an interface LSI 418 of the CATV set-top box 401S is constituted and operates in manners similar to those shown in Fig. 2.

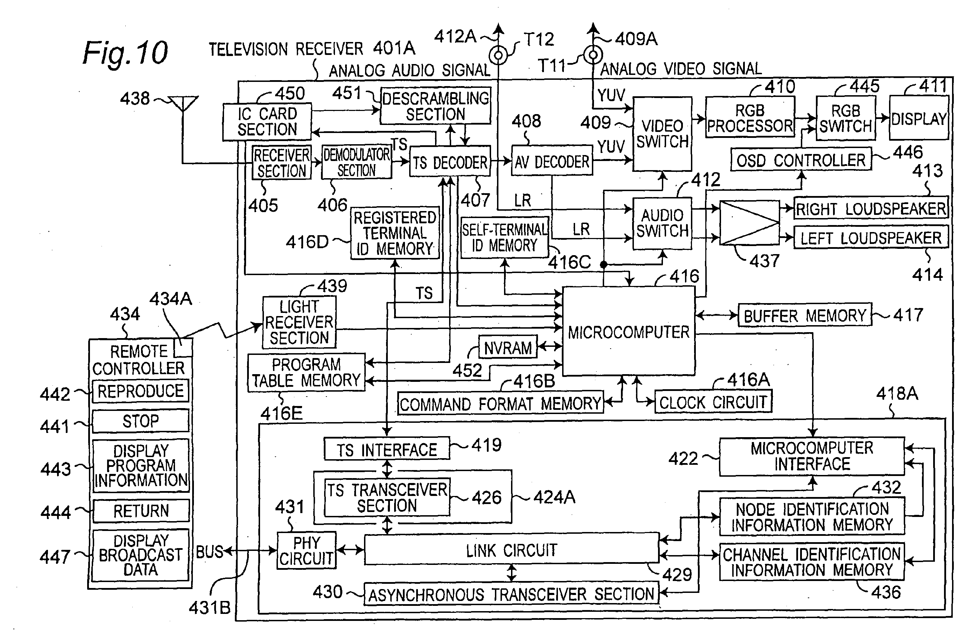

Fig. 10 is a block diagram showing detailed configuration of the television receiver 401A shown in Fig. 8.

Referring to Fig. 10, the television receiver 401S according to the second preferred embodiment is different from the television receiver 401 shown in Fig. 2 in the following respects:
(1) The television receiver 401A further includes a program table memory 416E.
(2) The television receiver 401A includes an interface LSI 418A in place of the interface LSI 418.

These differences will be described hereinafter.

Referring to Fig. 10, program table data included in program data on a digital television broadcasting wave as received by an antenna 438 is extracted by a TS decoder 407, and then, it is stored in the program table memory 416E, and then read out by a microcomputer 416. Further, the microcomputer 416 receives data on a program purchase status or agreement status included in a descramble enable/disable notification request command as received from the CATV set-top box 401S through the bus wiring 431B, through a PHY circuit 431, a LINK circuit 429, an asynchronous transceiver section 430, and a microcomputer interface 422, and displays the data on a display 411 using an OSD controller 446. Alternatively, the microcomputer 416 judges whether or not descrambling is enabled using the data on the program purchase status or agreement status.

The interface LSI 418A is characterized by not including the information insertion section 425 of the synchronous transceiver section 424 of the interface LSI 418 shown in Fig. 2 and the program related information memory 423 shown in Fig. 3, but by including only a TS transceiver section 426. The TS as received by the PHY circuit 431 and the LINK circuit 429 is transmitted from the TS transceiver section 426 to the TS decoder 407 through the TS interface 419. On the other hand, the TS from the TS decoder 407 is transmitted to the CATV set-top box 401S by the LINK circuit 429 and the PHY circuit 431 through the TS interface 419 and the TS transceiver section 426.

Fig. 11 is a sequence diagram showing communication procedures for transmitting and receiving a descrambled TS between the CATV set-top box 401S and the television receiver 401A shown in Fig. 8. In Fig. 11, it is assumed that the normal IC card is inserted into the CATV set-top box 401S and that no normal IC card is inserted into the television receiver 401A.

Referring to Fig. 11, the television receiver 401A transmits a normal IC card's inserted/detached state notification request command to the CATV set-top box 401S. In response to the command, the CATV set-top box 401S transmits a PPV purchasable/unpurchasable notification command (including purchase probability information) to the television receiver 401A in a PPV mode processing. In response to this command, the television receiver 401A transmits a PPV purchase request and terminal ID notification command to the CATV set-top box 401S. Next, the CATV set-top box 401S transmits a descramble enable notification command which indicates that a PPV is purchasable while the normal IC card is inserted into the television receiver 401A. At this time, the television receiver 401A transmits a channel select command and a TS output request command to request that a program be designated and that program data on the program be outputted to the CATV set-top box 401S. In response to the commands, the CATV set-top box 401S descrambles the scrambled program data as received from CATV, generates a descrambled TS, and outputs the descrambled TS to the television receiver 401A. In response to this, the television receiver 401A outputs the received TS to the display 411 and the left and right loudspeakers 414 and 413, and transmits a reception end command to the CATV set-top box 401S when finishing outputting the program data, thus finishing the communication procedures.

Referring to Fig. 11, the communication procedures for the PPV mode processing are shown. However, the present invention is not limited to them. If the CATV is not PPV-based CATV, the communication procedures for the PPV mode processing may be omitted. Further, purchase confirmation may be performed under the same communication procedures as those for the PPV mode processing as to not only the PPV but also whether or not additional provided services of various kinds of agreements such as a series agreement and a set agreement can be purchased.

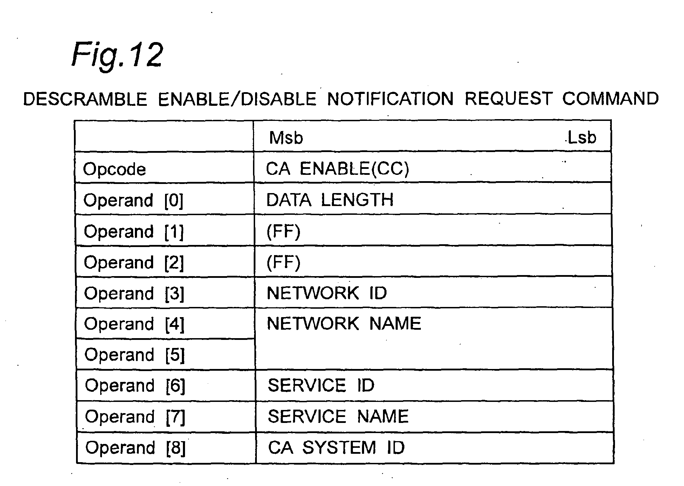

Fig. 12 is a diagram showing a format of the descramble enable/disable notification request command used in the communication procedures shown in Fig. 11. As shown in Fig. 12, the descramble enable/disable notification request command includes not only "CA ENABLE (CC)" as Opcode which indicates a command employed in the program data communication system and header information including a data length as Operand [0], but also a network ID which is an ID for identifying a CATV company, a network name which is information indicating a name of the CATV company, a service ID which is an ID for identifying a CATV program, a service name which is information indicating a CATV program name, and a CA system ID (note that a CA system is an ID for identifying a CATV conditional access system and that the CA system ID unitarily indicates a CA module) as additional operands. Operands [1] and [2] are blank (FF) because the descramble enable/disable notification command which is a response to the descramble enable/disable notification request command uses these regions.

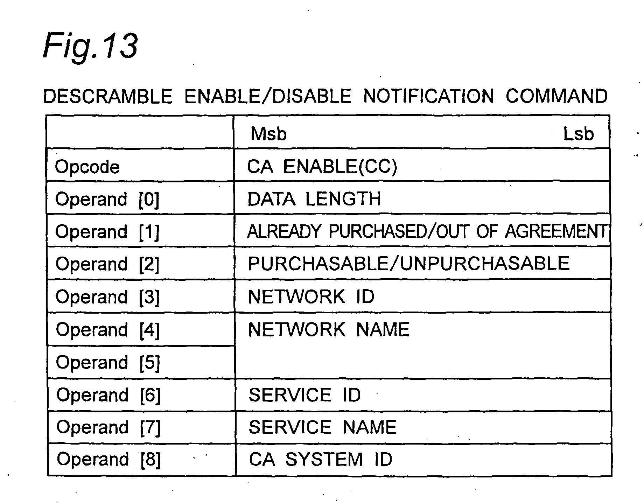

Fig. 13 is a diagram showing a format of the PPV purchasable/unpurchasable notification command or the descramble enable/disable notification command employed in the communication procedures shown in Fig. 11. As shown in Fig. 13, the PPV purchasable/unpurchasable notification command or the descramble enable/disable notification command includes not only "CA ENABLE (CC)" as Opcode which indicates a command employed in the program data communication system and header information including a data length as Operand [0], but also information for discriminating already purchased/out of agreement for indicating an agreement status of the program, information for discriminating whether or not the program is purchasable/unpurchasable as a PPV program as well as a network ID, a network name, a service ID, a service name, and a CA system ID of information described in the descramble enable/disable notification request command as additional operands. When it is notified that the program is purchasable as a PPV program, information of Operand [2] is purchasable. When it is notified that the program can be descrambled, information of Operand [1] has been already purchased.

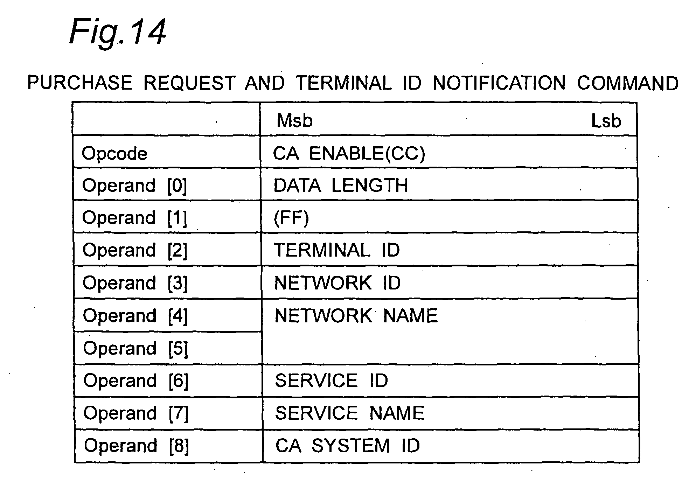

Fig. 14 is a diagram showing a format of the purchase request and terminal ID notification command employed in the communication procedures shown in Fig. 11. The purchase request and terminal ID notification command includes not only "CA ENABLE (CC)" as Opcode which indicates a command employed in the program data communication system and header information including a data length as Operand [0], but also a terminal ID of the television receiver 401A as well as the network ID, the network name, the service ID, the service name, and the CA system ID of information described in the descramble enable/disable notification request command as additional operands. This command serves as a purchase request by a response accompanied by the terminal ID.

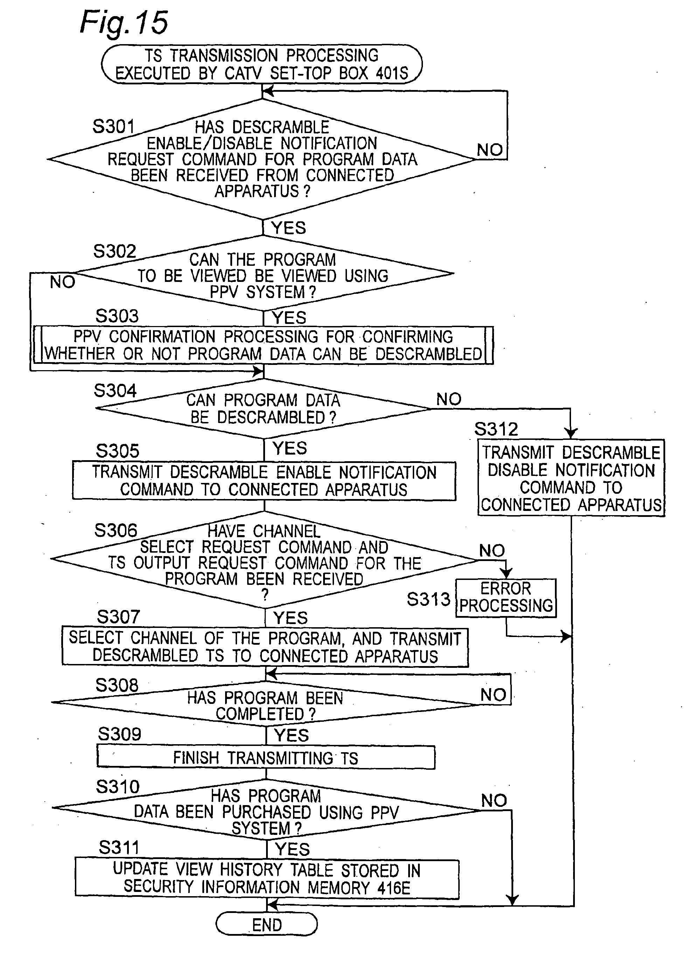

Fig. 15 is a flowchart showing a TS transmission processing executed by the CATV set-top box 401S shown in Fig. 9.

Referring to Fig. 15, at step S301, it is judged whether or not the descramble enable/disable notification request command for program data has been received from the connected apparatus (which is the television receiver 401A connected onto the bus wiring 431B in this processing flow). The processing of step S301 is repeated until the judgment result of step S301 becomes YES. If YES at step S301, the processing flow goes to step S302. At step S302, it is judged whether or not the program to be viewed can be viewed using the PPV system. If YES at step S302, the processing flow goes to step S303. On the other hand, if No at step S302, the processing flow goes to step S304. At step S303, the PPV confirmation processing is executed for confirming whether or not the program can be descrambled. The processing flow then goes to the step S304. At step S304, it is judged whether or not the program data can be descrambled. If YES at step S304, the processing flow goes to step S305. On the other hand, if No at step S304, the processing flow goes to step S312. The judgment as to whether or not the program can be descrambled is made based on an IC card's inserted/detached state as well as identification information as stored in the IC card and the purchase status or agreement status of the designated program. At step S312, the CATV set-top box 401S transmits a descramble disable communication command to the connected apparatus, and then finishes the TS transmission processing.

At step S304, the CATV set-top box 401S transmits a descramble enable notification command to the connected apparatus. At step S306, it is judged whether or not the channel select request command and the TS output request command for the program have been received. If YES at step S306, the processing flow goes to step S307. On the other hand, if No at step S306, the processing flow goes to the step S303, and at which the CATV set-top box 401S executes an error processing, and the CATV set-top box 401S then finishes the TS transmission processing. At step S307, the CATV set-top box 401S selects a channel of the program, and transmits the descrambled TS to the connected apparatus. At step S308, it is judged whether or not the program has been completed. The processing of step S308 is repeated until the judgment result of step S308 becomes YES. If YES at step S308, the processing flow goes to step S309. At step S309, the CATV set-top box 401S finishes transmitting the TS. At step S310, it is judged whether or not the program data has been purchased using the PPV system. If YES at step S310, the processing flow goes to step S311. On the other hand, if No at step S310, the CATV set-top box 401S finishes the TS transmission processing. At step S311, the CATV set-top box 401S updates the view history table stored in the security information memory 416E, and then finishes the TS transmission processing. It is noted that steps S310 and S311 may be executed after the step S303 or the step S307 instead of after the step S309.

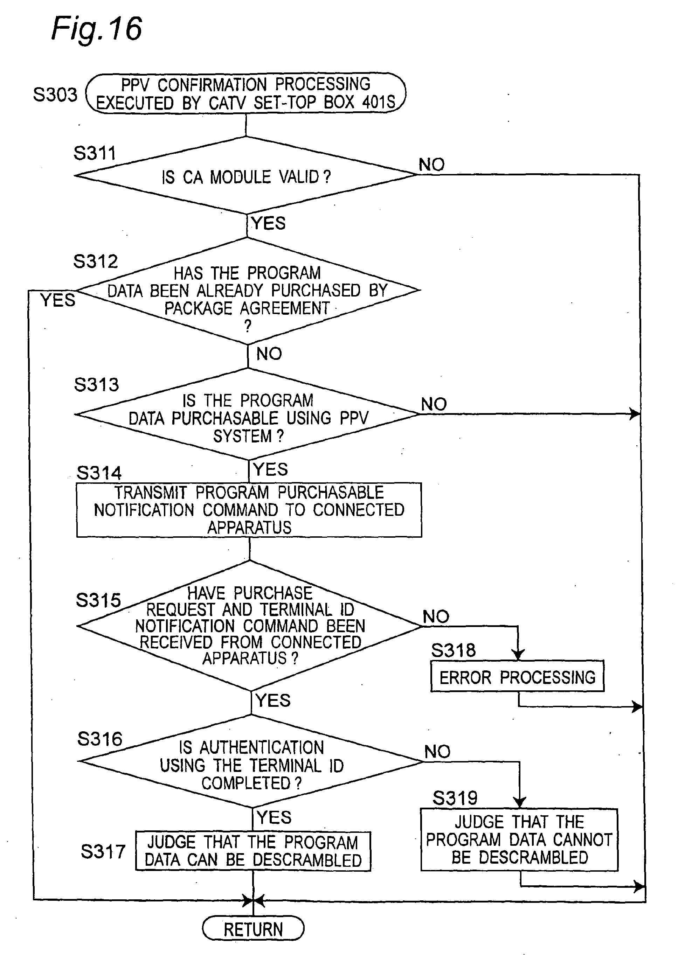

Fig. 16 is a flowchart showing a pay-per-view (referred to a PPV hereinafter) confirmation processing of a subroutine of Fig. 15.

Referring to Fig. 16, at step S311, it is judged whether or not the CATV CA module is valid based on the CATV IC card as inserted into the slot of the IC card section 450S. If YES at step S311, the processing flow goes to step S312. On the other hand, if NO at step S311, the processing flow returns to the original main routine. At step S312, it is judged whether or not the program data has been already purchased by the package agreement. If YES at step S312, any PPV authentication is unnecessary, and therefore, the processing flow returns to the original main routine. On the other hand, if No at step S312, the processing flow goes to step S313. At step S313, it is judged whether or not the program data is purchasable using the PPV system. If YES at step S313, the processing flow goes to step S314. On the other hand, if No at step S313, the processing flow returns to the original routine. At step S314, the CATV set-top box 401S transmits the program purchasable notification command to the connected apparatus. At step S315, it is judged whether or not the purchase request and terminal ID notification command have been received from the connected apparatus before a predetermined timeout. If YES at step S315, the processing flow goes to step S316. On the other hand, if No at step S315, the CATV set-top box 401S executes an error processing of step S318 and the processing flow returns to the original routine. At step S316, it is judged whether or not authentication using the terminal ID is completed. If YES at step S316, the processing flow goes to step S317. On the other hand, if No at step S316, the processing flow goes to step S319. The authentication using the terminal ID is judged to be completed when it is checked whether or not the terminal ID included in the received purchase request and terminal ID notification command coincides with that stored in the registered terminal ID memory 416D of the CATV set-top box 401S and it is judged that they coincide with each other. At step S317, it is judged that the program data can be descrambled, and the processing flow returns to the original routine. At step S319, it is judged that the program data cannot be descrambled, and the processing flow returns to the original routine.

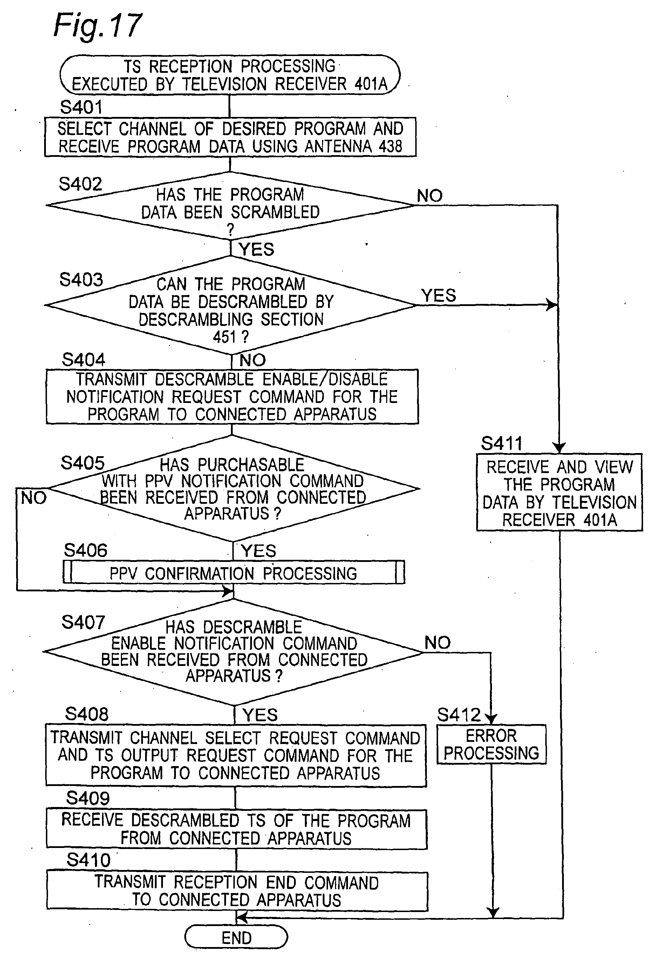

Fig. 17 is a flowchart showing a TS reception processing executed by the television receiver 401A shown in Fig. 10.

Referring to Fig. 17, at step S401, the television receiver 401A selects a channel of a desired program and receives program data using the antenna 438. At step S402, it is judged whether or not the program data has been scrambled. If YES at step S402, the processing flow goes to step S403. On the other hand, if No at step S402, the processing flow goes to step S411. At step S403, it is judged whether or not the program can be descrambled by the television receiver 401A. If YES at step S403, the processing flow goes to step S411. On the other hand, if No at step S403, the processing flow goes to step S404. At step S411, the television receiver 401A receives and views the program data, and finishes the TS transmission processing. The judgment as to whether or not the program can be descrambled can be made by checking the contents of the program related information on the program or by checking the header information on the TS.

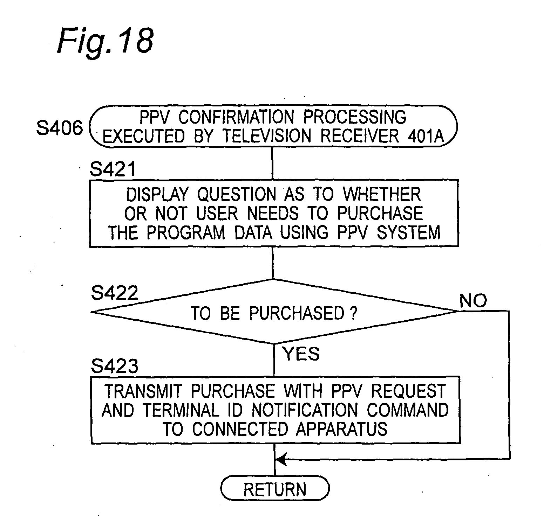

At step S404, the television receiver 401A transmits the descramble enable/disable notification request command for the program to the connected apparatus connected onto the bus wiring 431B, that is, the CATV set-top box 401S (note that the connected apparatus is the CATV set-top box 401S in this processing flow). At step S405, it is judged whether or not the purchasable with PPV notification command has been received from the connected apparatus. If YES at step S405 before a predetermined timeout, the processing flow goes to step S406. On the other hand, if No at step S405, the processing flow goes to step S407. At step S406, the television receiver 401A executes a PPV confirmation processing (See Fig. 18), and then, the processing then goes to step S407. At step 407, it is judged whether or not the descramble enable notification command has been received from the connected apparatus. If YES at step S407, the processing flow goes to step S408. On the other hand, if No at step S407, the processing flow goes to step S412. At step S412, the television receiver 401A executes an error processing, and then finishes the TS reception processing.

At step S408, the television receiver 401A transmits the channel select request command and the TS output request command for the program to the connected apparatus. At step S409, the television receiver 401A receives the descrambled TS of the program from the connected apparatus. At step S410, the television receiver 401A transmits the reception end command to the connected apparatus, and finishes the TS reception processing. It is noted that, when the television receiver 401A receives the descramble enable notification command from the connected apparatus within a timeout period, the processing can go to the step S408.

Fig. 18 is a flowchart showing the PPV confirmation processing of a subroutine of Fig. 17. Referring to Fig. 18, at step S421, the television receiver 401A displays such a question as to whether or not the user needs to purchase the program data using the PPV system. At step S422, the user judges whether or not the program data is to be purchased. If YES at step S422, the processing flow goes to step S423. On the other hand, if No at step S422, the processing flow returns to an original routine. At step S423, the television receiver 401A transmits the purchase with PPV request and terminal ID notification command including the terminal ID stored in the terminal ID memory 416C of the television apparatus 401A to the connected apparatus, and the processing flow returns to the original routine.

Alternatively, the operations of the steps S421, S422 and S423 may be executed automatically without any user's operation. At step S421, the microcomputer 416 recognizes that it is necessary to purchase the program data as the PPV program based on the PPV purchasable notification command as received at step S405. At step S422, setting is made such that the program data is purchasable in response to the PPV purchasable/unpurchasable notification command from the terminal having the terminal ID which the user has registered in the registered terminal ID memory 416D of the television receiver 401A in advance. By thus setting, the microcomputer 416 judges whether or not the program data is purchasable as the PPV program by comparing the terminal ID of the connected apparatus with that stored in the memory 416D. Further, at step S423, the microcomputer 416 transmits the purchase request and terminal ID notification command including the terminal ID stored in the terminal ID memory 416C of the television receiver 401A to the connected apparatus, and the processing flow returns to the original routine. In this modified preferred embodiment, the terminal ID of the connected apparatus to be compared with that registered in the registered terminal ID memory 416D of the television receiver 401 may be acquired through the asynchronous transceiver section 430 under control of the microcomputer 416, or may be transmitted while being included in the PPV purchasable/ unpurchasable notification command.

As described above, according to the second preferred embodiment, the CATV set-top box 401S and the television receiver 401A are connected to each other through the bus wiring 431B using the digital bus signal. Even if no normal IC card is inserted into the IC card section 450 of the television receiver 401A, it suffices that the normal IC card is inserted into the IC card section 450S of the CATV set-top box 401S. If so, as shown in Fig. 11, after checking the normal IC card's inserted/detached state of the CATV set-top box 401S using the normal IC card's inserted/detached state notification request command and the normal IC card's inserted/detached state notification command that is a response signal to the normal IC card's inserted/detached state notification request command, the television receiver 401A transmits the channel select command and the TS output request command for requesting the CATV set-top box 401S to designates a program and output program data on the program, to the CATV set-top box 401S. In response to the commands, the CATV set-top box 401S descrambles the scrambled program data, and outputs the descrambled program data to the television receiver 401A through the bus wiring 431B. Therefore, the television receiver 401A can display the program data as received by the CATV set-top box 401S on the display 411, and output the program data to the loudspeakers 414 and 413.

Further, as shown in Fig. 11, the PPV purchasable/unpurchasable check and purchase request can be performed between the CATV set-top box 401S and the television receiver 401A.

Moreover, even if the IC card section and the descrambling section are constituted by a single CA module circuit in the CATV set-top box 401S, the program data communication system according to the present preferred embodiment can be carried out. Besides, by connecting and adding the CATV set-top box 401S to the television receiver 401A, the television receiver 401A searches the connected apparatus on the bus wiring 431B. In addition, the CATV set-top box 401S is allowed to execute the descrambling processing, and this leads to that the television receiver 401A can acquire the descrambled program data through the bus wiring 431B. Additionally, the descrambling function can be added without any changing of the channel select method of the television receiver 401A.

It is noted that the CATV set-top box 401S is a set-top box which receives a television broadcasting program in place of the CATV. The set-top box executes descrambling for the television receiver 401A in the following cases. The CATV set-top box 401S is connected to the television receiver 401A by a radio LAN and the television receiver 401A is moved and the user views the program. If so, then the reception state of the broadcasting wave of the program becomes the worse, and the television receiver 401A cannot descramble the program data, and therefore, can not view the program. In this case, the program data can be descrambled by the set-top box 401S so that the user can view the same program.

### MODIFIED PREFERRED EMBODIMENT OF SECOND PREFERRED EMBODIMENT

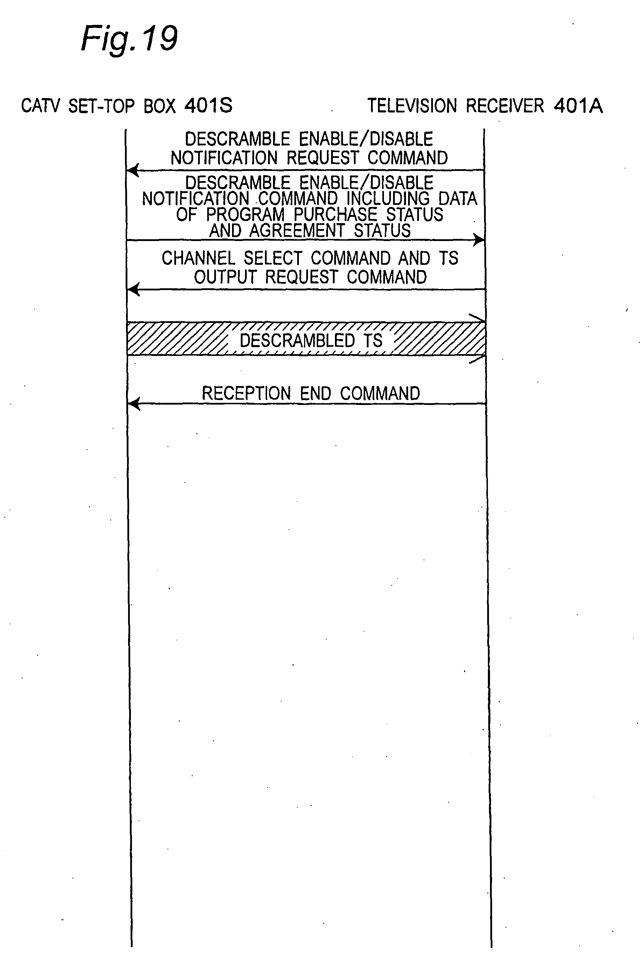

Fig. 19 is a sequence diagram showing communication procedures according to a modified preferred embodiment of the second preferred embodiment of the present invention, where the procedures are provided for transmitting and receiving a descrambled TS between a CATV set-top box 401S and a television receiver 401A. In the modified preferred embodiment of the second preferred embodiment, in a manner to that of the second preferred embodiment, the program data communication system including the CATV set-top box 401S shown in Fig. 9 and the television receiver 401 shown in Fig. 10 is employed. The program data communication system is characterized, as compared with the second preferred embodiment shown in Fig. 11, in that a descramble enable/disable notification command to be transmitted from the CATV set-top box 401S to the television receiver 401A is transmitted while including data on a purchase status or agreement status on the program. The purchase status or agreement status data is, for example, data on a list of packages for which the user has already concluded viewing agreements or services (or programs) which the user has already purchased. In the communication procedures shown in Fig. 19, those for the PPV mode processing are not shown. However, the present invention is not limited to this but communication procedures for the PPV mode processing may be executed.

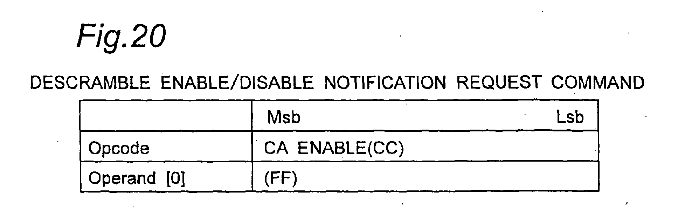

Fig. 20 is a diagram showing a format of the descramble enable/disable notification request command employed in the communication procedures shown in Fig. 19. The descramble enable/disable notification request command shown in Fig. 20 is to request the program purchase status or agreement status data. Therefore, as compared with the descramble enable/disable notification request command shown in Fig. 12, the descramble enable/ disable notification request command shown in Fig. 20 includes header information including "CA ENABLE (CC)" as Opcode indicating the command used in the program data communication system, but does not include a CATV network ID, a network name, a CATV service ID, a service name, and a CA system ID which are information for identifying the program. It is considered that the descramble enable/disable notification request command in this case is stored in a form of broadcast packet.

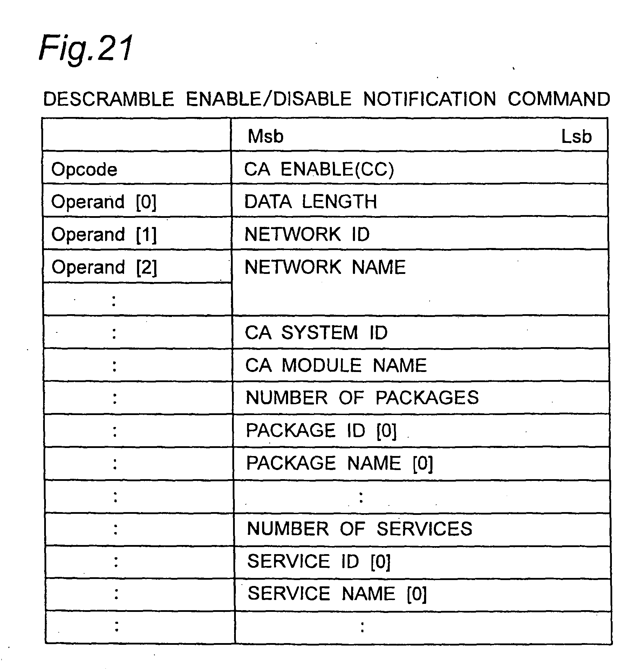

Fig. 21 is a diagram showing a format of the descramble enable/disable notification command employed in the communication procedures shown in Fig. 19. As shown in Fig. 21, the descramble enable/disable notification command includes not only "CA ENABLE (CC)" as Opcode indicating the command used in the program data communication system and header information including a data length as Operand [0] but also a network ID, a network name, a CA system ID, a CA module name, the number of packages, a package ID and a package name of each package, the number of services, and a service ID and a service name of each service as additional Operand. In this case, the "package" means a package in which a plurality of program services provided by a CATV company are packaged. The packages or services stored in this descramble enable/disable notification command are packages for which the user has already concluded viewing agreements and which can be descrambled or services (programs) which the user has already purchased and which can be descrambled by the CATV setup box 401S.

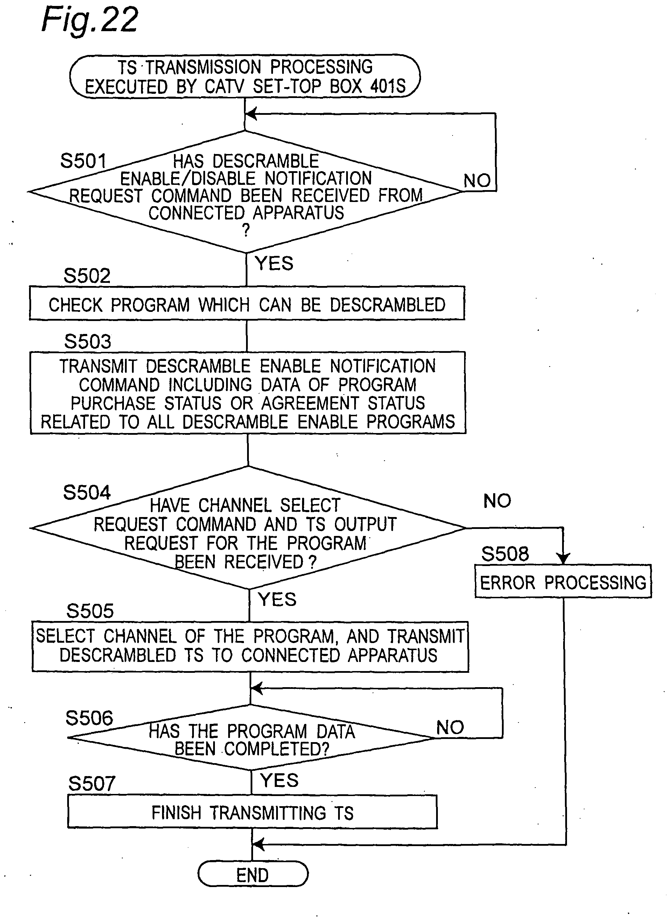

Fig. 22 is a flowchart showing a TS transmission processing employed in the communication procedures, and executed by the CATV set-top box 401S shown in Fig. 9 according to the modified preferred embodiment of the second preferred embodiment of the present invention.

Referring to Fig. 22, at step S501, it is judged whether or not the descramble enable/disable notification request command has been received from the connected apparatus (which is the television receiver 401A connected onto the bus wiring 431B in this processing flow). The processing of step S501 is repeated until the judgment result of step S501 becomes YES. If YES at step S501, the processing flow goes to step S502. At step S502, the CATV set-top box 401S checks the programs which can be descrambled. At step S503, the CATV set-top box 401S transmits the descramble enable notification command including the program purchase status or agreement status data related to all descramble enable programs to the connected apparatus. At step S504, it is judged whether or not the channel select request command and the TS output request command for the program have been received. If YES at step S504, the processing flow goes to step S505. On the other hand, if No at step S504, the processing flow goes to step S508. At step S508, the CATV set-top box 401S executes an error processing, and then finishes the TS transmission processing.

At step S505, the CATV set-top box 401S selects a channel of the program, and transmits a descrambled TS to the connected apparatus. At step S506, it is judged whether or not the program data has been completed. The processing of step S506 is repeated until the judgment result of step S506 becomes YES. If YES at step S506, the processing flow goes to step S507. At step S507, the CATV set-top box 401S finishes transmitting the TS, and then finishes the TS transmission processing.

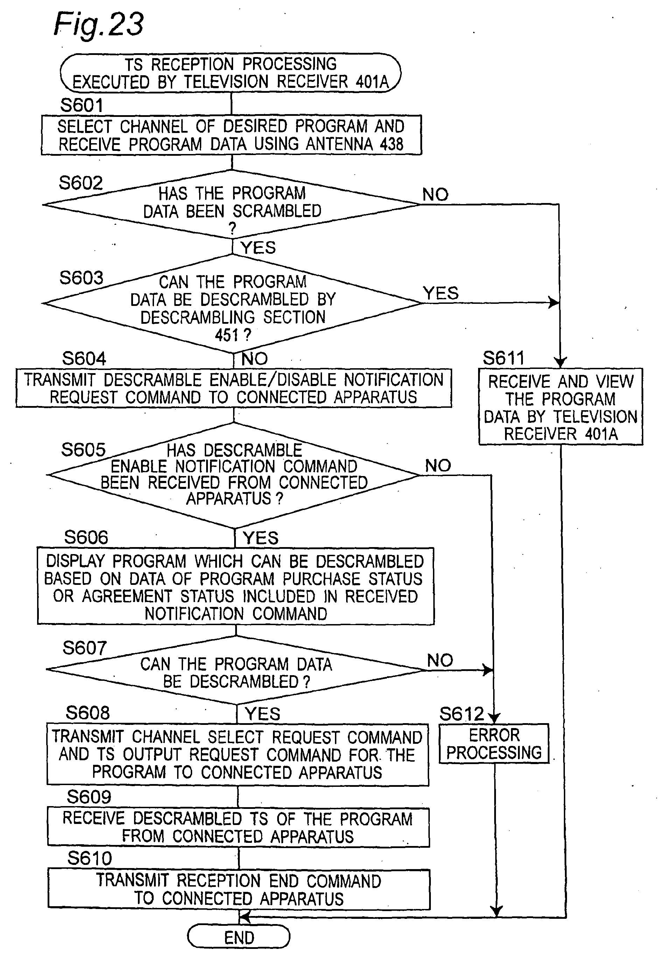

Fig. 23 is a flowchart showing a TS reception processing employed in the communication procedures and executed by the television receiver 401A according to the modified preferred embodiment of the second preferred embodiment of the present invention.

Referring to Fig. 23, the television receiver 401A selects a channel of a desired program using the antenna 438. At step S602, it is judged whether or not the program data has been scrambled. If YES at step S602, the processing flow goes to step S603. On the other hand, if No at step S603, the processing flow goes to step S611. At step S603, it is judged whether or not the program can be descrambled by the descrambling section 451. If YES at step S603, the processing flow goes to the step S611. On the other hand, if No at step S603, the processing flow goes to step S604. At step S611, the television receiver 401A receives and views the program data, and finishes the TS reception processing.

At step S604, the television receiver 401A transmits the descramble enable/disable notification request command to the connected apparatus (which is the CATV set-top box 401S in this processing flow). At step S605, it is judged whether or not the descramble enable notification command has been received from the connected apparatus before a predetermined timeout. If YES at step S605, the processing flow goes to step S606. On the other hand, if No at step S605, the processing flow goes to step S612. At step S612, the television receiver 401A executes an error processing, and then finishes the TS reception processing. At step S606, the television receiver 401A displays a program which can be descrambled based on the program purchase status or agreement status data included in the received notification command. At step S607, it is judged whether or not the program can be descrambled. If YES at step S607, the processing flow goes to step S608. On the other hand, if No at step S607, the processing flow goes to the step S612. At step S608, the television receiver 401A transmits the channel select request and TS output request command to the connected apparatus. At step S609, the television receiver 401A receives the descrambled TS of the program data from the connected apparatus. At step S610, the television receiver 401A transmits the reception end command to the connected apparatus, and then finishes the TS reception processing.

Alternatively, the microcomputer 416 may automatically execute the processing of steps S606 and S607 without any user's operation. Concretely, at step S606, the microcomputer 416 analyzes the program purchase status or agreement status data included in the received notification command, and checks whether or not the program is included in the programs which can be descrambled by the CATV set-top box 401S. At step S607, the microcomputer 41 judges whether or not the CATV set-top box 401S can descramble the program data.

As described above, the modified preferred embodiment of the second preferred embodiment exhibits the same functions and advantages as those of the second preferred embodiment. The television receiver 401A transmits the descramble enable/ disable notification request command to request that the program purchase status or agreement status data including information on the programs which can be descrambled be transmitted, to the CATV set-top box 401S. In response to this command, the CATV set-top box 401S transmits the descramble enable/disable notification command including the program purchase status or agreement status data including the information on the programs which can be scrambled, to the television receiver 401A. Then it is advantageously possible that the user can search and select the desired program from the program table data.

### THIRD PREFERRED EMBODIMENT

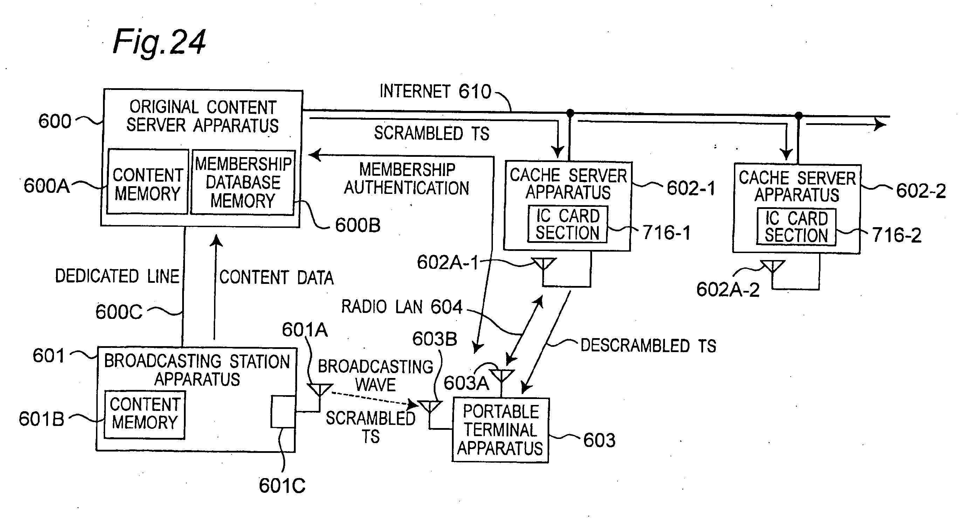

Fig. 24 is a block diagram showing configuration of a program data communication system according to a third preferred embodiment of the present invention. Conventionally, program data stored in a content memory 601B of a broadcasting station apparatus 601 is transmitted such that a radio wave including a scramble TS is transmitted from a broadcasting wave transmitter 601C of the broadcasting station apparatus 601 through an antenna 601A into a free space, which is received by an antenna 603B of a television receiver such as a portable terminal apparatus 603 or the like, and then, it is transmitted and displayed. The program data communication system according to the third preferred embodiment is characterized in that the program data stored in the content memory 601B of the broadcasting station apparatus 601 is transferred to a content memory 600A of an original content server apparatus 600 connected to the Internet 610 through a dedicated line 600C, and that content data on the program is provided only to the portable terminal apparatus 603 of a predetermined member through the Internet 610, cache server apparatuses 602-1 and 602-2, and a radio LAN 604.

Referring to Fig. 24, the original content server apparatus 600 includes a membership database memory 600B which stores membership information, such as a user ID, a password, and a terminal ID, on the portable terminal apparatus of each user. The original content server apparatus 600, the plurality of cache server apparatuses 602-1 and 602-2, and the like are connected to the Internet 610. The respective cache server apparatuses 602-1 and 602-2 include IC card sections 716-1 and 716-2 each including a slot into which an IC card is inserted. In the present preferred embodiment, the portable terminal apparatus 603 and the cache server apparatus 602-1 or 602-2 are connected to each other by the radio LAN 604, and hold two-directional radio communication using respective antennas 603A and 602A-1 or 602A-2. It is noted that the IC card sections 716-1 and 716-2 may be integral with the IC cards, respectively.

In the program data communication system according to the present preferred embodiment, the portable terminal apparatus 603 can receive the program data as transmitted from the original content server apparatus 600 through the cache server apparatus 602A-1 or 602A-2 when the program data as received from the broadcasting wave cannot be descrambled and viewed. The membership authentication is performed between the portable terminal apparatus 603 and the original content server apparatus 600 through the cache server apparatus 602A-1 or 602A-2 as located within an area of the radio LAN 604 and through the Internet 610. When the membership is authenticated, the cache server apparatus 602-1 or 602-2 receives the scrambled TS from the original content server apparatus 600, temporarily stores the received TS in a buffer memory 701, extracts the TS of a program designated by the portable terminal apparatus 603 from the scrambled TS, descrambles the extracted TS of the program using a normal IC card as installed in the IC card section 716-1 or 716-2, transmits the descrambled TS to the portable terminal apparatus 603 through the radio LAN 604 over radio communication, and allows the user to view and listen to the program.

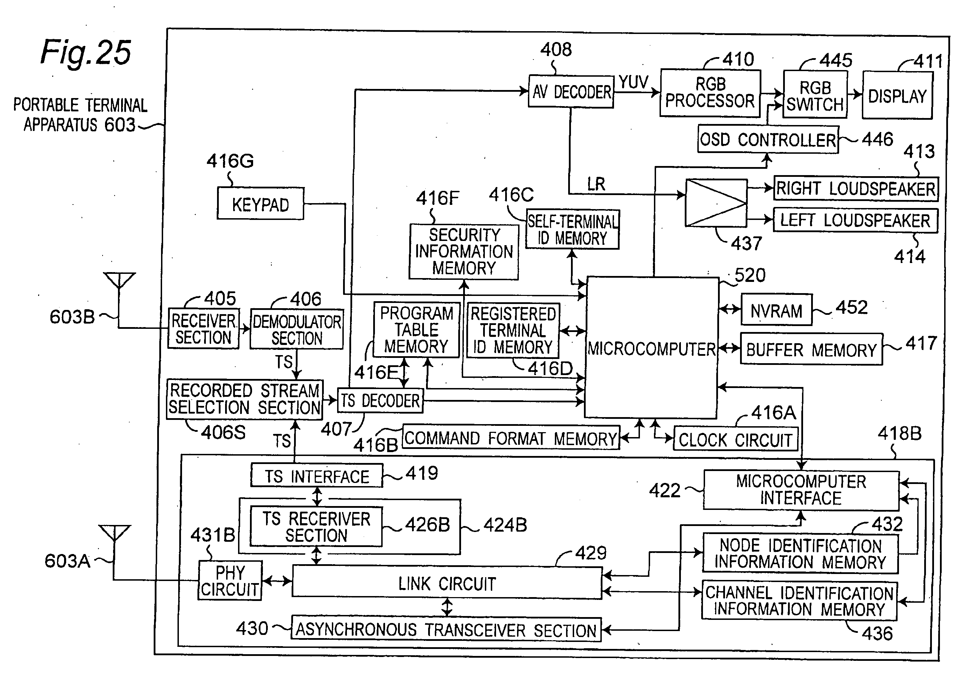

Fig. 25 is a block diagram showing detailed configuration of the portable terminal apparatus 603 shown in Fig. 24. The portable terminal apparatus 603 shown in Fig 25 includes, for example, a function of a cellular telephone or a function of a PDA (Personal Digital Assistant) as well as a function of a television receiver and a radio LAN connection function shown in Fig. 25. The portable terminal apparatus 603 shown in Fig. 25 is different from the television receiver 401A shown in Fig. 10 in the following respects:
(1) The portable terminal apparatus 603 does not include the IC card section 450, the descrambling section 451, the video switch 409, and the audio switch 412.
(2) The portable terminal apparatus 603 includes a microcomputer 520 which controls respective components of the portable terminal apparatus 603 in place of the microcomputer 416.
(3) The portable terminal apparatus 603 includes a keypad 416G connected to the microcomputer 520 and having a plurality of input keys including Number keys in place of remote controller 434 and light receiver section 439.
(4) The portable terminal apparatus 603 includes a security information memory 416E which is connected to the microcomputer 520 and which stores security information including a user ID, a password, and a terminal ID for performing the above-stated membership authentication.
(5) The portable terminal apparatus 603 further includes a recorded stream selection section 406S. The recorded stream selection section 406S selects a TS from a demodulator section 406 or a TS from a TS interface 419 in an alternative way, and outputs the selected TS to a TS decoder 407.
(6) The portable terminal apparatus 603 includes an antenna 603B such as a small-sized antenna in place of the antenna 438 such as the parabola antenna or the like.
(7) The portable terminal apparatus 603 includes an interface LSI 418B in place of the interface LSI 418A. The interface LSI 418B includes a synchronous receiver section 424B that includes a TS receiver section 426B in place of the synchronous transceiver section 424A that includes the TS transceiver section 427. Further, the interface LSI 418B includes a PHY circuit 431B which includes an antenna 603A and which has a radio LAN communication function in place of the PHY circuit 431 connected to the bus wiring 431B. The PHY circuit 431B holds radio communication with the cache server apparatus 602-1 or 602-2 using communication procedures in conformity to, for example, IEEE802.11a, IEEE802.11b, or IEEE802.11g.

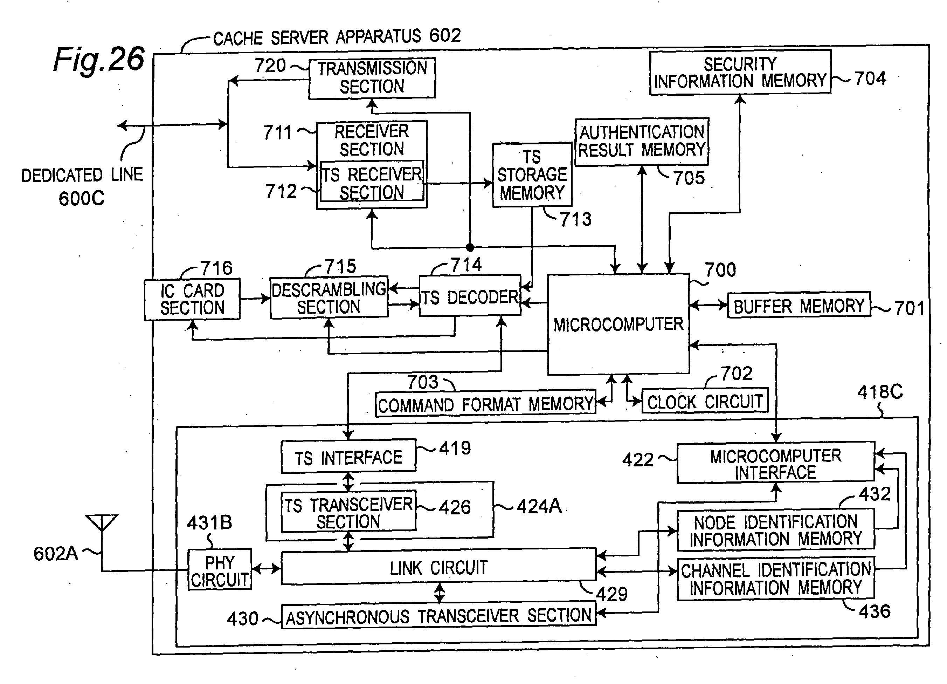

Fig. 26 is a block diagram showing detailed configuration of the cache server apparatus 602 shown in Fig. 24. The cache server apparatus 602 shown in Fig. 26 is connected to the Internet 610, includes a function of holding communication over the radio LAN 604, is inserted between the original content server apparatus 600 and the portable terminal apparatus 603, and has a function of transmitting and receiving communication with these apparatuses 600 and 603. The cache server apparatus 602 shown in Fig. 26 is different from the television receiver 401A shown in Fig. 10 in the following respects:
(1) In place of the antenna 438 for digital television broadcasting shown in Fig. 10, a dedicated line 600C connected to the Internet 610 is connected to the cache server apparatus 602.
(2) The cache server apparatus 602 includes a receiver section 711 that includes a TS receiver section 712, a transmitter section 720, a TS decoder 714, an IC card section 716, a descrambling section 715, and a TS memory 713 for transmitting and receiving program data such as the TS and command data or the like through the Internet 610, in place of the receiver section 405, the demodulator section 406, the TS decoder 407, the IC card section 450, and the descrambling section 415 for digital television broadcasting shown in Fig. 10. The TS of the program data as received from the original content server apparatus 600 through the Internet 610 is received by the TS receiver section 712 of the receiver section 711, is outputted to the TS decoder 714 through the TS memory 713 serving as a temporary storage memory, and is subjected to the same decoding processing as that shown in Fig. 10 by the IC card section 716 and the descrambling section 715. Thereafter, the descrambled TS is outputted to the TS interface 419.
(3) The cache server apparatus 602 includes a microcomputer 700 which controls components of the cache server apparatus 602 in place of the microcomputer 416 shown in Fig. 10. A buffer memory 701, a clock circuit 702, a command format memory 703, a security information memory 704, and an authentication result memory 705 are connected to the microcomputer 700. The microcomputer 700 receives the security information on the member from the portable terminal apparatus 603, temporarily stores the received security information in the security information memory 704, and then transmits the security information to the original content server apparatus 600 using the transmitter section 720 through the Internet 610. The microcomputer 700 temporarily stores an authentication result as received by the receiver section 711 from the original content server apparatus 600, and then transmits the authentication result to the portable terminal apparatus 603 using a command signal through the microcomputer interface 422.
(4) The cache server apparatus 602 includes an interface LSI 418C in place of the interface LSI 418A. The interface LSI 418C includes a PHY circuit 431B which includes an antenna 602A and which is connected to the bus wiring 431B in place of the PHY circuit 431 and includes a radio LAN communication function. The PHY circuit 431B holds radio communication with the potable terminal apparatus 603 using the antenna 602A and using communication procedures in conformity to, for example, IEEE802.11a, IEEE802.11b, or IEEE802.11g.

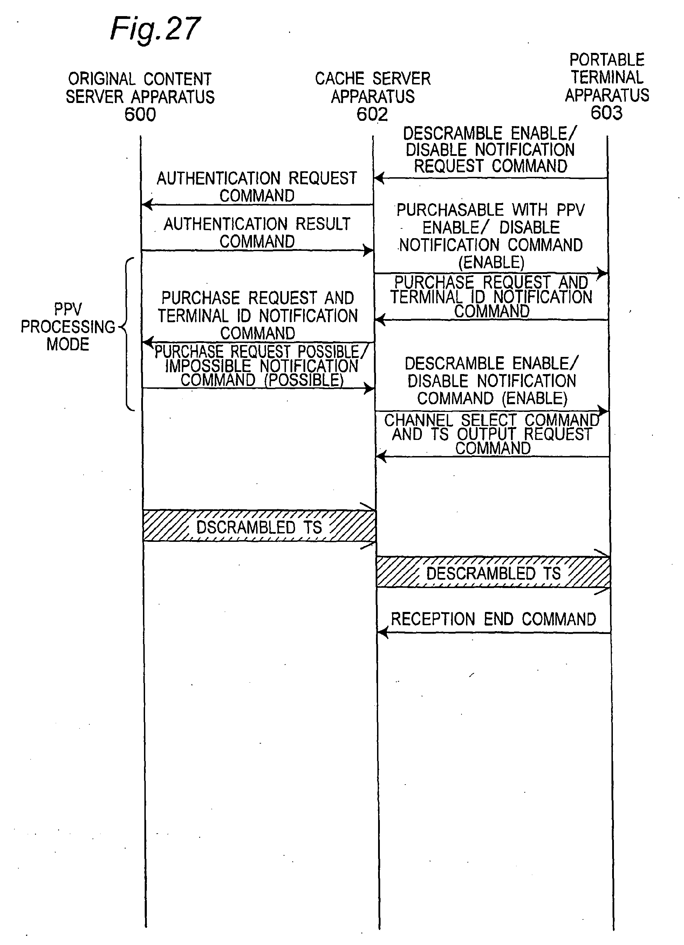

Fig. 27 is a sequence diagram showing communication procedures for transmitting and receiving the descrambled TS among the original content server apparatus 600, the cache server apparatus 602, and the portable terminal apparatus 603 shown in Fig. 24.

Referring to Fig. 27, the portable terminal apparatus 603 first transmits a descramble enable/disable notification command to the cache server apparatus 602 so as to view a scrambled program which is selected using a program table. In response to this, the cache server apparatus 602 transmits an authentication request command to the original content server apparatus 600. At this time, the original content server apparatus 600 refers to the membership database memory 600B, performs membership authentication to judge whether or not the portable terminal apparatus 603 for which a authentication request is transmitted is a member, and transmits an authentication result command including the authentication result ("authenticated" in the processing flow of Fig. 27) to the cache server apparatus 602. In response to this, the cache server apparatus 602 turns into a PPV processing mode, and transmits a purchasable with PPV purchasable/unpurchasable command ("purchasable" in the processing flow of Fig. 27) to the portable terminal apparatus 603. In response to this, the portable terminal apparatus 603 transmits a purchase request and terminal ID notification command to the cache server apparatus 602. The cache server apparatus 602 transfers the purchase request and terminal ID notification command to the original content server 600. In response to this, the original content server 600 refers to the membership database memory 600B to judge whether or not the program is purchasable as a PPV program, and transmits a purchase request possible/impossible notification command ("possible" in the processing flow of Fig. 27) to the cache server apparatus 602. At this time, the cache server apparatus 602 transmits a descramble enable/disable notification command to the portable terminal apparatus 603. Thus, the PPV mode processing is completed. Further, the portable terminal apparatus 603 transmits a channel select command and a TS output request command to the cache server apparatus 602. In response to these commands, the cache server apparatus 602 extracts the TS of the desired program from the scrambled TS which are received from the original content server apparatus 600, descrambles the extracted TS of the program based on decoding key information from the IC card section 716-1 into which the normal IC card is inserted, and transmits the descrambled TS to the portable terminal apparatus 603. The portable terminal apparatus 603 receives the descrambled TS, transmits a reception end command to the cache server apparatus 602 when finishing the reception of the program table data on the TS, and finishes the communication procedures.

In the communication procedures shown in Fig. 27, the PPV mode processing is executed. However, the present invention is not limited to this. If the program to be purchased is not a PPV program, the PPV mode processing may be omitted.

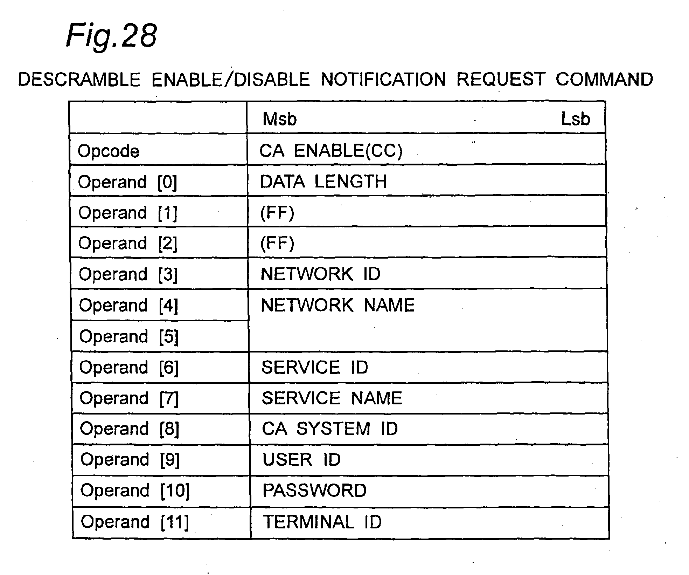

Fig. 28 is a diagram showing a format of the descramble enable/disable notification request command employed in the communication procedures shown in Fig. 27. As shown in Fig. 28, the descramble enable/disable notification request command includes not only "CA ENABLE (CC)" as Opcode which indicates a command employed in the program data communication system and header information including a data length as Operand [0], but also a network ID which is an ID for identifying a company, a network name which is information indicating a name of the company, a service ID which is an ID for identifying a program, a service name which is information indicating a program name, and a CA system ID which is an ID for identifying a conditional access system and for unitarily indicating a CA module as well as a user ID, a password, and a terminal ID for the membership authentication as additional operands.

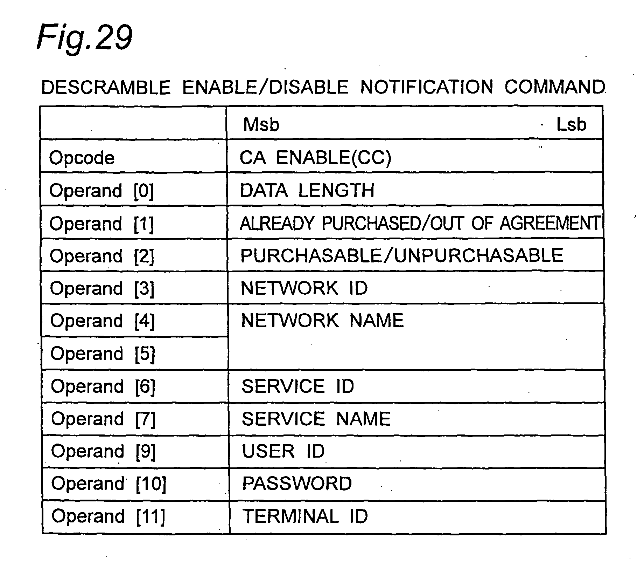

Fig. 29 is a diagram showing a format of the PPV purchasable/unpurchasable notification command or the descramble enable/disable notification command employed in the communication procedures shown in Fig. 27. As shown in Fig. 29, the PPV purchasable/unpurchasable notification command or the descramble enable/disable notification command includes not only "CA ENABLE (CC)" as Opcode and header information including a data length as Operand [0], but also information for discriminating already purchased/out of agreement for indicating an agreement status of the program, information for discriminating whether or not the program is purchasable/unpurchasable as a PPV program as well as a network ID, a network name, a service ID, a service name, a user ID, a password, and a terminal ID of information described in the descramble enable/disable notification request command as additional operands. When it is notified that the program is purchasable as a PPV program, information of Operand [2] is purchasable and information of Operand [1] has been already purchased.

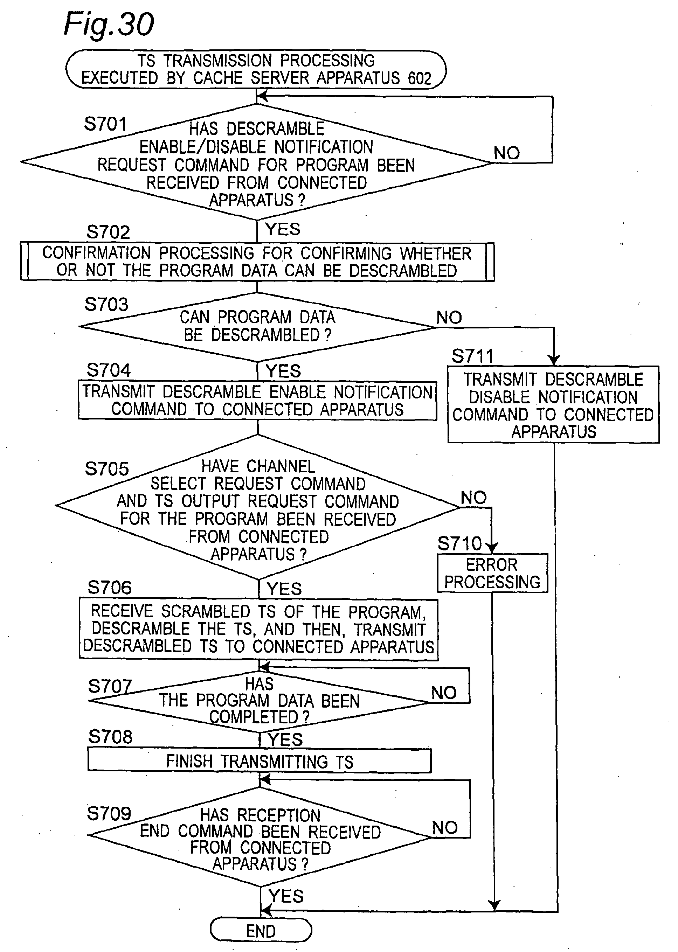

Fig. 30 is a flowchart showing a TS transmission processing executed by the cache server apparatus 602 shown in Fig. 26.

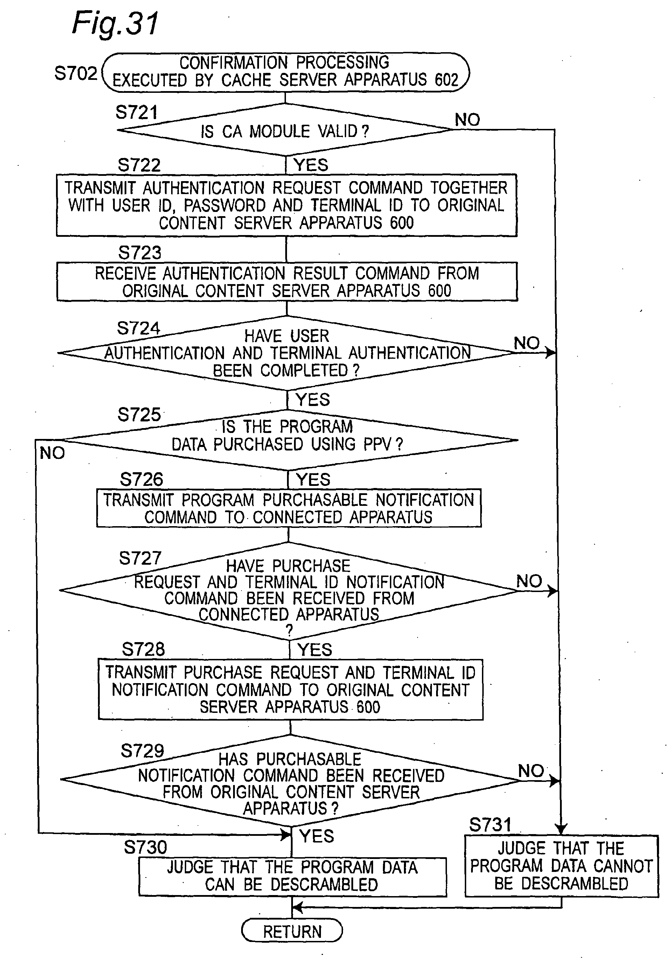

Referring to Fig. 30, at step S701, it is judged whether or not the descramble enable/disable notification request command for the program has been received from the connected apparatus (which is the portable terminal apparatus 603 in the processing flow of Fig. 30, and the same shall apply hereinafter). The processing of step S701 is repeated until the judgment result of step S701 becomes YES. If YES at step S701, the processing flow goes to step S702. Next, at step S702, a confirmation processing (See Fig. 31) is executed to confirm whether or not the program data can be descrambled. At step S703, it is judged whether or not the program data can be descrambled. If YES at step S703, the processing flow goes to step S704. On the other hand, if No at step S703, the processing flow goes to step S711. At step S711, the cache server apparatus 602 transmits a descramble disable notification command to the connected apparatus, and finishes the TS transmission processing.

At step S704, the cache server apparatus 602 transmits a descramble enable command to the connected apparatus. At step S705, it is judged whether or not the channel select request command and the TS output request command for the program have been received within a predetermined timeout period. If YES at step S705, the processing flow goes to step S706. On the other hand, if No at step S705, the processing flow goes to the step S710 at which the cache server apparatus 602 executes an error processing, and then finishes the TS transmission processing. At step S706, the cache server apparatus 602 receives the scrambled TS, descrambles the TS, extracts the TS of the program from the descrambled TS, and transmits the descrambled TS of the program to the connected apparatus. At step S707, it is judged whether or not the program data has been completed. The processing of the step S707 is repeated until the judgment result of step S707 becomes YES. If YES at step S707, the processing flow goes to step S708. At step S708, the cache server apparatus 602 finishes transmitting the TS. At step S709, it is judged whether or not the cache server apparatus 602 has received the reception end command from the connected apparatus. The processing of the step S709 is repeated until the judgment result of step S709 becomes YES. If YES at step S709, the cache server apparatus 602 finishes the TS transmission processing.

At step 706, the descrambled TS is transmitted over radio through a specific transmission channel secured between the cache server apparatus 602 and the portable terminal apparatus 603 in a transmission band of the radio LAN 604. Security of the radio transmission between the cache server apparatus 602 and the portable terminal apparatus 603 can be kept by channel connection management and local encryption processing for each channel.

Fig. 31 is a flowchart showing a confirmation processing which is a subroutine of Fig. 30.

Referring to Fig. 31, at step S721, it is judged whether or not the CA module is valid. If YES at step S721, the processing flow goes to step S722. On the other hand, if No at step 721, the processing flow goes to step S731. At step S722, the cache server apparatus 602 transmits the authentication request command accompanied by the user ID, the password, and the terminal ID to the original content server apparatus 600. At step S723, the cache server apparatus 602 receives the authentication result command from the original content serer apparatus 600. At step S724, it is judged whether or not the user authentication and terminal authentication have been completed. If YES at step S724, the processing flow goes to step S725. On the other hand, if No at step S724, the processing flow goes to the step S731.

At step S725, it is judged whether or not the program data is purchased using the PPV system. If YES at step S725, the processing flow goes to step S726. On the other hand, if No at step S725, the processing flow goes to step S730. It is noted that when the judgment result is NO, it means that the program has been already purchased or an agreement for the program has been already concluded, and that it is unnecessary to purchase the program again. At step S726, the cache server apparatus 602 transmits the program purchasable notification command to the connected apparatus (which is the portable terminal apparatus 603 in the processing flow of Fig. 31). At step S727, it is judged whether or not the purchase request and terminal ID notification command have been received from the connected apparatus. If YES at step S727, the processing flow goes to step S728. On the other hand, if No at step S727, the processing flow goes to the step S731. At step S728, the cache server apparatus 602 transmits the purchase request and terminal ID notification command to the original content server apparatus 600. At step S729, it is judged whether or not the purchasable notification command has been received from the original content server apparatus 600. If YES at step S729, the processing flow goes to step S730. On the other hand, if No at step S729, the processing flow goes to the step S731. At step S730, it is judged that the program can be descrambled, and the processing flow returns to the original routine. At step S731, it is judged that the program cannot be descrambled, and the processing flow returns to the original routine.

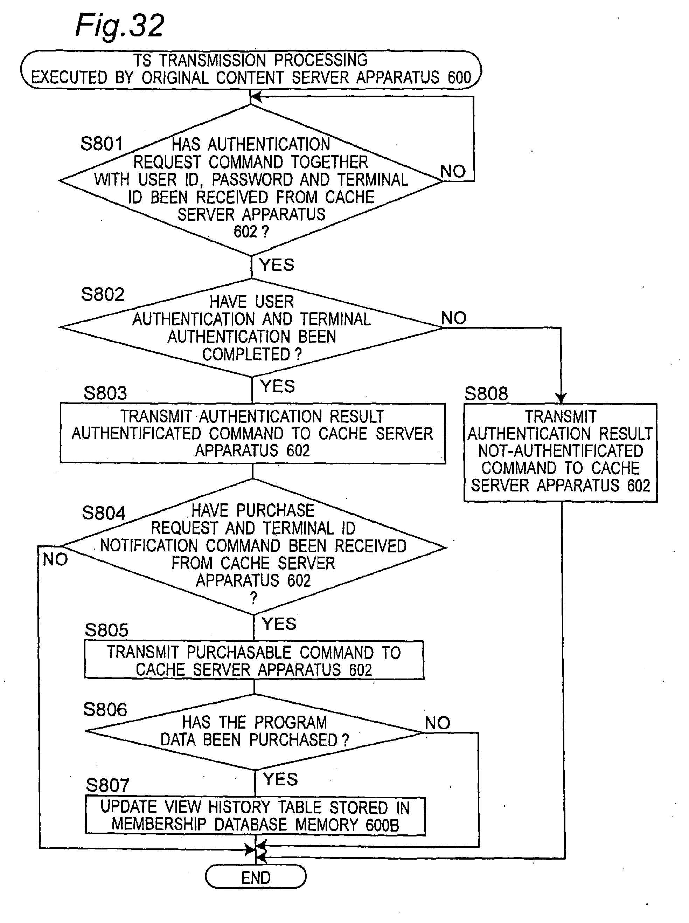

Fig. 32 is a flowchart showing a TS transmission processing executed by the original content server apparatus 600 shown in Fig. 24. The processing flow of Fig. 32 shows operations after such a state that the original content server apparatus 600 reads out the scrambled TS from the content memory 600A and transmits the read-out TS to the cache server apparatus 602.

Referring to Fig. 32, at step S801, it is judged whether or not the authentication request command as accompanied with the user ID, the password, and the terminal ID has been received from the cache server apparatus 602. The processing of step S801 is repeated until the judgment result of step S801 becomes YES. If YES at step S801, the processing flow goes to step S802. At step S802, it is judged whether or not user authentication and terminal authentication have been completed. If YES at step S802, the processing flow goes to step S803. On the other hand, if No at step S802, the processing flow goes to step S808. At step S808, the original content serer apparatus 600 transmits an authentication result 'not-authenticated' command to the cache server apparatus 602, and finishes the TS transmission processing.

At step S803, the original content server apparatus 600 transmits an authentication result 'authenticated' command to the cache server apparatus 602. At step S804, it is judged whether or not the purchase request and terminal ID notification command have been received from the cache server apparatus 602 within a predetermined timeout period when the original content server apparatus 600 transmits the authentication result 'authenticated" command. If YES at step S804, the processing flow goes to step S805. On the other hand, if NO at step S804, the original content server apparatus 600 finishes the TS transmission processing. At step S805, the original content server apparatus 600 transmits the purchasable command to the cache server apparatus 602. At step S806, it is judged whether or not the program data has been purchased. If YES at step S806, the processing flow goes to step S807. On the other hand, if No at step S806, the original content server apparatus 600 finishes the TS transmission processing. At step S807, the original content server apparatus 600 updates the view history table stored in the membership database memory 600B based on the purchase information, and finishes the TS transmission processing.

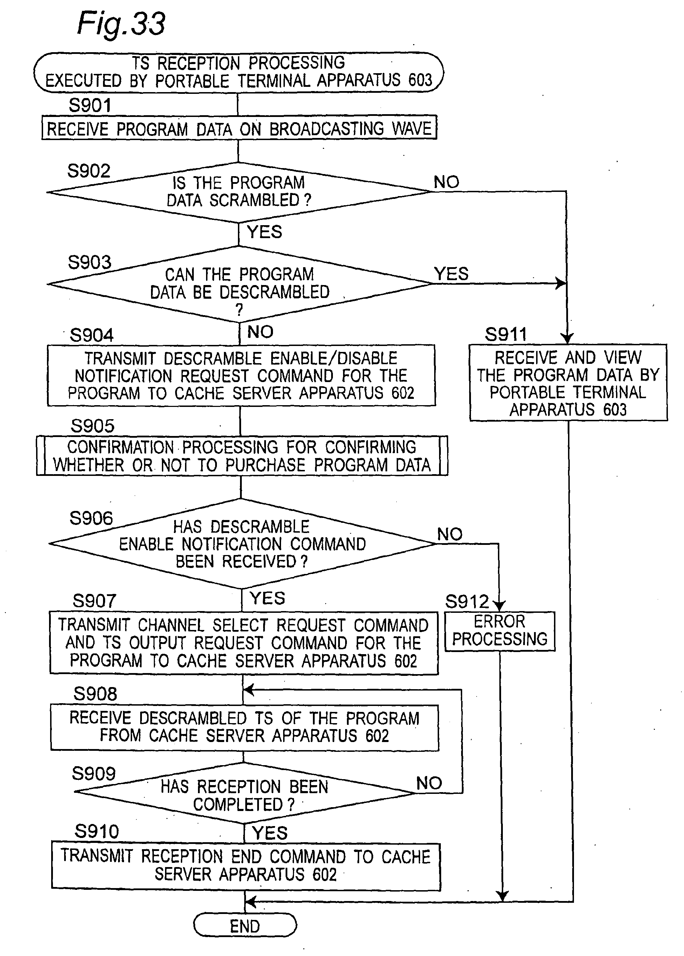

Fig. 33 is a flowchart showing a TS reception processing executed by the portable terminal apparatus 603 shown in Fig. 25.

Referring to Fig. 33, at step S901, the portable terminal apparatus 603 receives program data and program table data on the broadcasting wave. At step S902, it is judged whether or not the program data of program which was selected by the user from the program table has been scrambled. If YES at step S902, the processing flow goes to step S903. On the other hand, if No at step S902, the processing flow goes to step S911. At step S903, it is judged whether or not the program can be descrambled by the portable terminal apparatus 603 itself. If YES at step S903, the processing flow goes to step S911. On the other hand, if No at step S903, the processing flow goes to step S904. At step S911, the portable terminal apparatus 603 receives and views the program data, and finishes the TS transmission processing.

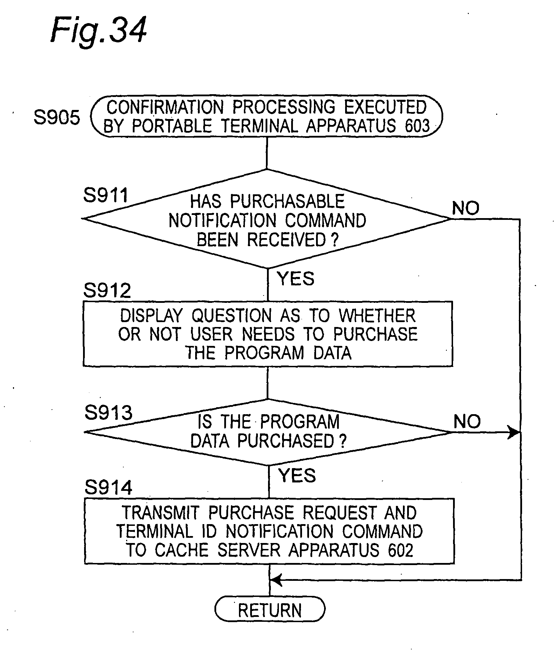

At step S904, the portable terminal apparatus 603 transmits the descramble enable/disable notification request command for the program to the cache server apparatus 602. At step S905, the portable terminal apparatus 603 executes a confirmation processing for confirming whether or not to purchase the program (See Fig. 34). At step S906, it is judged whether or not a descramble enable notification command has been received. If YES at step S906, the processing flow goes to step S907. On the other hand, if No at step S906, the processing flow goes to step S912. At step S912, the portable terminal apparatus 603 executes an error processing, and then finishes the TS reception processing.

At step S907, the portable terminal apparatus 603 transmits the channel select request command and the TS output request command for the program to the cache server apparatus 602. At step S908, the portable terminal apparatus 603 receives the descrambled TS of the program from the cache server apparatus 602. At step S909, it is judged whether or not reception processing has been completed. The processing of step S908 is repeated until the judgment result of step S909 becomes YES. If YES at step S909, the processing flow goes to step S910. At step S910, the portable terminal apparatus 603 transmits the reception end command to the cache server apparatus 602, and finishes the TS reception processing.

Fig. 34 is a flowchart showing the confirmation processing which is a subroutine of Fig. 33.

Referring to Fig. 34, at step S911, it is judged whether or not the purchasable notification command has been received. If YES at step S911, the processing flow goes to step S912. On the other hand, if No at step S911, the processing flow returns to an original routine. At step S912, the portable terminal apparatus 603 displays such a question as to whether or not the user needs to purchase the program data. At step S913, it is judged whether or not the program data can be purchased. When the user judges that the program data can be purchased, i.e., If YES at step S913, the processing flow goes to step S914. On the other hand, if No at step S913, the processing flow returns to an original routine. At step S914, the portable terminal apparatus 603 transmits the purchase request and terminal ID notification command to the cache server apparatus 602, and the processing flow returns to the original routine.

As described above, according to the third preferred embodiment, the portable terminal apparatus 603 is connected to the cache server apparatus 602-1 through the radio LAN 604, and the cache server apparatus 602-1 is connected to the original content server apparatus 600 through the Internet 610. Even if no normal IC card is inserted into the portable terminal apparatus 603, it suffices that the normal IC card is inserted into the cache server apparatus 602-1 and that the portable terminal apparatus 603 holds the membership authentication data. If so, as shown in Fig. 27, after checking the membership information with reference to the membership data memory 600B as installed in the original content server apparatus 600, the portable terminal apparatus 603 transmits the channel select command and the TS output request command for requesting the cache server apparatus 602-1 to designate a program and output program data on the program, to the cache server apparatus 602-1. In response to the commands, the cache server apparatus 602 extracts the program data from the scrambled program data as received from the original content server apparatus 600, descrambles the extracted program data, and outputs the descrambled program data to the portable terminal apparatus 603 by radio transmission. Therefore, the user can view and listen to the program data.

Further, as shown in Fig. 27, the PPV purchasable/unpurchasable check and purchase request can be performed between the original content server apparatus 600 and the portable terminal apparatus 603 through the cache server apparatus 602.

Moreover, even if the IC card section and the descrambling section are constituted by a single CA module circuit in the cache server apparatus 602, the program data communication system according to the present preferred embodiment can be carried out. Besides, the portable terminal apparatus 603 can search the original content server apparatus 600 on the radio LAN 604 through the cache server apparatus 602-1 and the Internet 610. In addition, the portable terminal apparatus 603 can allow the cache server apparatus 602-1 to execute the descrambling processing, and acquire the descrambled program data through the radio LAN 604. Further, the descrambling function can be added without any changing of the channel select method of the portable terminal apparatus 603.

Furthermore, when the user of the portable terminal apparatus 603 moves the portable terminal apparatus 603 and views and listens to the broadcasting program, it is possible to acquire the program data which can be viewed by a server apparatus disposed in the user's house by searching the cache server apparatus 602 which can perform the descrambling processing through the radio LAN 604. The cache server apparatus 602 is not limited to the server apparatus in the user's house. The portable terminal apparatus 603 can be connected to an ordinary server apparatus disposed outdoor such as a so-called hot spot over radio communication.

In the above-stated third preferred embodiment, the cache server apparatus 602 is connected to the portable terminal apparatus 603 by the radio LAN 604. However, the present invention is not limited to this. They can be connected to each other the other radio communication line or the other wired communication line such as a wired LAN, an IP line, an IP-VPN line, or the like.

In the above-stated third preferred embodiment, the original content server apparatus 600 checks whether or not to descramble the data by the membership authentication confirmation. This checking method may be applied to the first and the second preferred embodiments.

### MODIFIED PREFERRED EMBODIMENT

In the above-stated preferred embodiments, the DVD recorder 501 and the television receiver 401A are disclosed as examples of the program data receiver apparatus. However, the present invention is not limited to this. The present invention may be applied to a recording and reproduction apparatus, such as a CD (Compact Disc) recorder, a hard disc recorder or the like, which receives program data and which records the received program data in a recording medium such as an optical disc or the like.

### INDUSTRIAL APPLICABILITY

As described above, the program data transmitter apparatus according to the present invention includes a distribution device, a descrambling device, a first communication device, and a second communication device. The distribution device receives or stores and distributes a plurality of pieces of program data, and the descrambling device descrambles at least one of the plurality of pieces of program data. In response to a notification request command signal from a program data receiver apparatus for requesting a notification as to whether or not at least one designated program data among the plurality of pieces of program data can be descrambled, the first communication device transmits a notification command signal including information as to whether or not the designated program data can be descrambled by the descrambling device to the program data receiver apparatus. The second communication device descrambles the designated program data in response to a transmission request command signal from the program data receiver apparatus for requesting that the designated program data be transmitted, and then transmits descrambled program data to the program data receiver apparatus.

On the other hand, the program data receiver apparatus according to the present invention includes a third communication device, a fourth communication device, and a fifth communication device. The third communication device transmits a notification request command signal for requesting a notification as to whether or not at least one designated program data among a plurality of pieces of program data can be descrambled, to a program data receiver apparatus. The fourth communication device transmits a transmission request command signal for requesting that the designated program data be descrambled and transmitted, in response to a notification command signal from the program data transmitter apparatus, the notification command signal including information as to whether or not the designated program data can be descrambled. The fifth communication device receives the descrambled program data from the program data transmitter apparatus.

Accordingly, the program data transmitter apparatus and the program data receiver apparatus are connected to each other through the communication line. Even if the authentication IC card, for example, is not inserted into the program data receiver apparatus, it suffices that the authentication IC card, for example, is inserted into the program data transmitter apparatus. If so, after checking the authentication state of the program data transmitter apparatus, the program data receiver apparatus transmits the transmission request command signal for requesting that the program be designated and that program data on the program be output, to the program data transmitter apparatus using the descramble authentication notification request command and the notification command which is a response signal to the descramble authentication notification request command. In response to this, the program data transmitter apparatus descrambles the scrambled program data, and transmits and outputs the descrambled program data to the program data receiver apparatus through the communication line. Therefore, the program data receiver apparatus can transmit and output the program data as received by the program data transmitter apparatus to the program data receiver apparatus.

In addition, in the program data transmitter apparatus, even if the descrambling device, for example, including the IC card section and the descrambling section, is constituted by a single module circuit in the program data transmitter apparatus, the program data communication system can be implemented.

Further, even if the program data receiver apparatus is a terminal apparatus which cannot descramble the program data, it suffices that the program data transmitter apparatus is simply connected to and added to the program data receiver apparatus. Then the program data receiver apparatus can search the connected apparatus on the communication line, allows the program data transmitter apparatus to execute the descrambling processing, and acquire the descrambled program data through the communication line.

Furthermore, the descrambling function can be added without any changing of the channel select method of the program data receiver apparatus.

## Claims

1. A program data transmitter apparatus comprising:
distribution means for receiving or storing and distributing a plurality of pieces of program data;
descrambling means for descrambling at least one of the plurality of pieces of program data;
first communication means, in response to a notification request command signal from a program data receiver apparatus for requesting a notification as to whether or not at least one designated program data among the plurality of pieces of program data can be descrambled, for transmitting a notification command signal including information as to whether or not the designated program data can be descrambled by said descrambling means to the program data receiver apparatus; and
second communication means for descrambling the designated program data in response to a transmission request command signal from said program data receiver apparatus for requesting that the designated program data be transmitted, and then transmitting descrambled program data to said program data receiver apparatus.

2. The program data transmitter apparatus as claimed in claim 1,
wherein said descrambling means includes an insertion slot for inserting a card, and judges whether or not at least one of the program data can be descrambled based on presence or absence of the card stored in the card as inserted into the insertion slot.

3. The program data transmitter apparatus as claimed in claim 1,
wherein said descrambling means includes an insertion slot for inserting a card, and judges whether or not at least one of the program data can be descrambled based on card identification information stored in the card as inserted into the insertion slot.

4. The program data transmitter apparatus as claimed in claim 1,
wherein said descrambling means includes an insertion slot for inserting a card, and judges whether or not at least one of the program data can be descrambled based on a purchase status or an agreement status of a program stored in the card as inserted into the insertion slot.

5. The program data transmitter apparatus as claimed in claim 1,
wherein said descrambling means judges whether or not at least one of the program data can be descrambled based on predetermined membership information.

6. The program data transmitter apparatus as claimed in any one of claims 1 to 5,
wherein said descrambling means generates a decoding key for decoding at least one of the program data based on master key information stored in the card, and decodes at least one of the program data based on a generated decoding key.

7. The program data transmitter apparatus as claimed in any one of claims 1 to 6,
wherein, in response to a notification request command signal from the program data receiver apparatus for requesting a notification as to whether or not the at least one designated program among the plurality of pieces of program data can be descrambled, said first communication means transmits a notification command signal for notifying whether or not a predetermined additional provided service related to the designated program data is purchasable to the program data receiver apparatus, receives a notification command signal for requesting purchase of the additional provided service from the program data receiver apparatus in response to the notification command signal from said first communication means, and transmits a notification command signal including information as to whether or not the program data can be descrambled to the program data receiver apparatus in response to the notification command signal from the program data receiver apparatus.

8. The program data transmitter apparatus as claimed in any one of claims 1 to 7,
wherein, in response to a notification request command signal from the program data receiver apparatus for requesting a notification as to whether or not all of the plurality of pieces of program data can be descrambled, said first communication means transmits a notification command signal including information as to whether or not the all pieces of program data can be descrambled to the program data receiver apparatus.

9. The program data transmitter apparatus as claimed in any one of claims 1 to 8,
wherein said first communication means transmits and receives the command signals using an isochronous protocol, and
wherein said second communication means transmits the program data using an asynchronous protocol.

10. A program data receiver apparatus comprising:
third communication means for transmitting a notification request command signal for requesting a notification as to whether or not at least one designated program data among a plurality of pieces of program data can be descrambled, to a program data receiver apparatus;
fourth communication means for transmitting a transmission request command signal for requesting that the designated program data be descrambled and transmitted, in response to a notification command signal from the program data transmitter apparatus, the notification command signal including information as to whether or not the designated program data can be descrambled; and
fifth communication means for receiving the descrambled program data from the program data transmitter apparatus.

11. The program data receiver apparatus as claimed in claim 10,
wherein said third communication means allows the program data receiver apparatus to receive a notification command signal from the program data transmitter apparatus for notifying whether or not a predetermined additional provided service related to the designated program data is purchasable, and transmits a notification command signal for requesting that the additional provided service be purchased to the program data transmitter apparatus in response to the notification command signal from the program data transmitter apparatus.

12. The program data receiver apparatus as claimed in claim 10 or 11,
wherein said third and said fourth communication means transmit and receive the command signals using an isochronous protocol, and
wherein said fifth communication means receives the program data using an asynchronous protocol.

13. The program data receiver apparatus as claimed in any one of claims 10 to 12, further comprising:
receiver means for receiving the program data; and
descrambling means for descrambling the program data, and
wherein, when said descrambling means cannot descramble the program data as received by said receiver means, said fourth communication means transmits a transmission request command signal for requesting that the program data be descrambled and transmitted to the program data transmitter apparatus.

14. The program data receiver apparatus as claimed in claim 13,
wherein said descrambling means includes an insertion slot for inserting a card, and judges whether or not the program data can be descrambled based on presence or absence of the card stored in the card as inserted into the insertion slot.

15. The program data receiver apparatus as claimed in claim 13,
wherein said descrambling means includes an insertion slot for inserting a card, and judges whether or not at least one of the program data can be descrambled based on card identification information stored in the card as inserted into the insertion slot.

16. The program data receiver apparatus as claimed in claim 13,
wherein said descrambling means includes an insertion slot for inserting a card, and judges whether or not at least one of the program data can be descrambled based on a purchase status or an agreement status of a program stored in the card as inserted into the insertion slot.

17. The program data transmitter apparatus as claimed in claim 1, further comprising sixth communication means for receiving a notification request command signal for requesting a notification as to whether or not at least one of the program data including predetermined membership information can be descrambled from the program data transmitter apparatus, for transferring the predetermined membership information to a content server apparatus communicably connected to the program data transmitter apparatus, and for receiving an authentication result from said content server apparatus in response to transfer of the predetermined membership information,
wherein it is judged whether or not at least one of the program data can be descrambled based on an authentication result.

18. The program data transmitter apparatus as claimed in claim 17, further comprising descrambling means for descrambling scrambled program data, and
wherein said sixth communication means receives the scrambled program data which is transmitted from the program data transmitter apparatus, descrambles the received program data by said descrambling means, and transmits descrambled program data to the program data receiver apparatus.

19. A program data transmitter apparatus as claimed in claim 17 or 18,
wherein the program data transmitter apparatus and the program data receiver apparatus are connected to each other through a radio communication line.

20. The program data transmitter apparatus as claimed in claim 19,
wherein the radio communication line is a radio LAN.

21. A program data communication system comprising:
the program data transmitter apparatus as claimed in any one of claims 1 to 9; and
the program data receiver apparatus as claimed in any one of claims 10 to 16, and
wherein the program data transmitter apparatus and the program data receiver apparatus are connected to each other through a predetermined communication line.

22. A program data communication system comprising:
the program data transmitter apparatus as claimed in any one of claims 1 to 9;
the program data receiver apparatus as claimed in any one of claims 17 to 20; and
said content server apparatus as claimed in claim 17,
wherein the program data transmitter apparatus and said content server apparatus are connected to each other through a predetermined first communication line, and
wherein the program data transmitter apparatus and the program data receiver apparatus are connected to each other through a predetermined second communication line.

23. The program data communication system as claimed in claim 21,
wherein information for identifying a network, information for identifying a service, and information for identifying a CA module are stored in a data region of a notification request command signal for requesting a notification as to whether or not the program data can be descrambled.

24. The program data communication system as claimed in claim 23,
wherein information for indicating an agreement status of the program and information for discriminating whether the program is purchasable or unpurchasable are stored in a data region of a notification command signal including information as to whether or not the program data can be descrambled.

25. The program data communication system as claimed in claim 24,
wherein a terminal ID of said data receiver apparatus is stored in a data region of a notification command signal for requesting the additional provided service be purchased.

26. The program data communication system as claimed in claim 21,
wherein data on a list of packages for which a user of said data transmitter apparatus having been already concluded viewing agreements or a list of services having been already purchased by the user is stored in a data region of a notification command signal including information as to whether or not the program data can be descrambled.

27. The program data communication system as claimed in claim 22,
wherein a user ID, a password, and a terminal ID are stored in a data region of a notification request command signal for requesting a notification as to whether or not the program data can be descrambled.

28. The program data communication system as claimed in claim 27,
wherein information for indicating an agreement status of the program and information for discriminating whether the program is purchasable or unpurchasable are stored in a data region of a notification command signal including information as to whether or not the program data can be descrambled.

29. The program data communication system as claimed in claim 28,
wherein a terminal ID of said data receiver apparatus is stored in a data region of a notification command signal for requesting that the additional provided service be purchased.

## Amended claims

### Amended claims under Art. 19.1 PCT

**1.** 29. (Cancelled)

**30.** (Added) A program data transmitter apparatus comprising:
distribution means for receiving or storing and distributing a plurality of pieces of program data;
descrambling means for descrambling at least one of a plurality of pieces of the program data;
first communication means for transmitting descrambled program data to a program data receiver apparatus as authenticated based on authentication information, in response to the following signals as transmitted from the program data receiver apparatus:
(a) a notification request command signal for requesting a notification as to whether or not at least one designated program data among the plurality of pieces of program data can be descrambled,
(b) an authentication information notification command signal for notifying the authentication information, and
(c) a transmission request command signal for requesting transmission of the program data.

**31.** (Added) The program data transmitter apparatus as claimed in claim 30,
wherein said first communication means encrypts the descrambled program data and transmits encrypted program data.

**32.** (Added) The program data transmitter apparatus as claimed in claim 30 or 31,
wherein said first communication means transmits a notification command signal including information as to whether or not the program data designated by said descrambling means can be descrambled to the program data receiver apparatus, in response to the notification request command signal and the authentication information notification command signal.

**33.** (Added) The program data transmitter apparatus as claimed in any one of claims 30 to 32,
wherein said descrambling means judges whether or not at least one of the program data can be descrambled based on the authentication information.

**34.** (Added) The program data transmitter apparatus as claimed in any one of claims 30 to 33,
wherein the authentication information includes predetermined membership information.

**35.** (Added) The program data transmitter apparatus as claimed in any one of claims 30 to 33,
wherein the authentication information includes a predetermined terminal ID.

**36.** (Added) The program data transmitter apparatus as claimed in any one of claims 33 to 35,
wherein said descrambling means includes an insertion slot for inserting a card, and judges whether or not at least one of the program data can be descrambled based on presence or absence of the card stored in the card as inserted into the insertion slot.

**37.** (Added) The program data transmitter apparatus as claimed in any one of claims 33 to 35,
wherein said descrambling means includes an insertion slot for inserting a card, and judges whether or not at least one of the program data can be descrambled based on card identification information stored in the card as inserted into the insertion slot.

**38.** (Added) The program data transmitter apparatus as claimed in any one of claims 33 to 35,
wherein said descrambling means includes an insertion slot for inserting a card, and judges whether or not at least one of the program data can be descrambled based on a purchase status or an agreement status of a program stored in the card as inserted into the insertion slot.

**39.** (Added) The program data transmitter apparatus as claimed in any one of claims 36 to 38,
wherein said descrambling means generates a decoding key for decoding at least one of the program data based on master key information stored in said card, and decodes at least one of the program data based on a generated decoding key.

**40.** (Added) The program data transmitter apparatus as claimed in any one of claims 32 to 39,
wherein, in response to the notification request command signal, said first communication means transmits a notification command signal for notifying whether or not a predetermined additional provided service related to the designated program data is purchasable to the program data receiver apparatus,
wherein said first communication means receives a notification command signal for requesting purchase of the additional provided service and the authentication information notification command signal from the program data receiver apparatus in response to the notification command signal from said first communication means, and
wherein said first communication means transmits a notification command signal including information as to whether or not the program data can be descrambled to the program data receiver apparatus in response to the notification command signal from the program data receiver apparatus.

**41.** (Added) The program data transmitter apparatus as claimed in any one of claims 32 to 40,
wherein, in response to a notification request command signal from the program data receiver apparatus for requesting a notification as to whether or not all of the plurality of pieces of program data can be descrambled, said first communication means transmits a notification command signal including information as to whether or not the all pieces of program data can be descrambled to the program data receiver apparatus.

**42.** (Added) The program data transmitter apparatus as claimed in any one of claims 30 to 41,
wherein said first communication means transmits and receives the command signals using an asynchronous protocol, and transmits the program data using an isochronous protocol.

**43.** (Added) A program data receiver apparatus comprising:
second communication means for transmitting (a) a notification request command signal for requesting a notification as to whether or not at least one designated program data among a plurality of pieces of program data can be descrambled and (b) an authentication information notification command signal for notifying authentication information, to a program data transmitter apparatus,
wherein said second communication means transmits a transmission request command signal for requesting that the designated program data be descrambled and then transmitted, to the program data transmitter apparatus, and
wherein said second communication means receives the descrambled program data from the program data transmitter apparatus.

**44.** (Added) The program data receiver apparatus as claimed in claim 43,
wherein said second communication means receives and decodes the descrambled program data that is encrypted.

**45.** (Added) The program data receiver apparatus as claimed in claim 43 or 44,
wherein, in response to a notification command signal from the program data transmitter apparatus, the notification command including information as to whether or not the designated program data can be descrambled, said second communication means transmits a transmission request command signal for requesting that the designated program data be descrambled and then transmitted, to the program data transmitter apparatus.

**46.** (Added) The program data receiver apparatus as claimed in claim 45,
wherein said second communication means receives a notification command signal for notifying whether or not a predetermined additional provided service related to the designated program data is purchasable from the program data transmitter apparatus, and
wherein said second communication means transmits a notification command signal for requesting purchase of the additional provided service and the authentication information notification command to the program data transmitter apparatus, in response to the notification command signal as transmitted from the program data transmitter apparatus.

**47.** (Added) The program data receiver apparatus as claimed in any one of claims 43 to 46,
wherein said second communication means transmits and receives the command signals using an asynchronous protocol, and receives the program data using an isochronous protocol.

**48.** (Added) The program data receiver apparatus as claimed in any one of claims 43 to 47, further comprising descrambling means for descrambling the received program data,
wherein, when said descrambling means cannot descramble the program data as received by said receiver means, said second communication means transmits a notification request command signal for requesting a notification as to whether or not the program data can be descrambled, and the authentication information notification command signal to the program data transmitter apparatus.

**49.** (Added) The program data receiver apparatus as claimed in claim 48,
wherein said descrambling means includes an insertion slot for inserting a card, and judges whether the program data can be descrambled based on presence or absence of the card stored in the card as inserted into the insertion slot.

**50.** (Added) The program data receiver apparatus as claimed in claim 48,
wherein said descrambling means includes an insertion slot for inserting a card, and judges whether at least one of the program data can be descrambled based on card identification information stored in the card as inserted into the insertion slot.

**51.** (Added) The program data receiver apparatus as claimed in claim 48,
wherein said descrambling means includes an insertion slot for inserting a card, and judges whether at least one of the program data can be descrambled based on a purchase status or an agreement status of a program stored in the card as inserted into the insertion slot.

**52.** (Added) The program data transmitter apparatus as claimed in any one of claims 43 to 51,
wherein the authentication information includes predetermined membership information.

**53.** (Added) The program data transmitter apparatus as claimed in any one of claims 43 to 51,
wherein the authentication information includes a predetermined terminal ID.

**54.** (Added) The program data transmitter apparatus as claimed in claim 30,
wherein said first communication means transfers the authentication information to a content server apparatus communicably connected to the program data transmitter apparatus in response to the authentication information notification command signal from the program data receiver apparatus,
wherein said first communication means receives an authentication result from said content server apparatus in response to transfer of the authentication information, and
wherein said first communication means transmits the program data descrambled to the authenticated program data receiver apparatus based on authentication result.

**55.** (Added) The program data transmitter apparatus as claimed in claim 54,
wherein said first communication means receives the scrambled program data which is transmitted from said content server apparatus, descrambles the received program data by said descrambling means, and transmits descrambled program data to the program data receiver apparatus.

**56.** (Added) The program data transmitter apparatus as claimed in claim 55,
wherein said first communication means encrypts the descrambled program data, and transmits encrypted program data to said authenticated program data receiver apparatus.

**57.** (Added) The program data transmitter apparatus as claimed in any one of claims 54 to 56,
wherein the authentication information includes predetermined membership information.

**58.** (Added) The program data transmitter apparatus as claimed in any one of claims 54 to 56,
wherein the authentication information includes a predetermined terminal ID.

**59.** (Added) The program data transmitter apparatus as claimed in any one of claims 54 to 58,
wherein the program data transmitter apparatus and the program data receiver apparatus are connected to each other through a radio communication line.

**60.** (Added) The program data transmitter apparatus as claimed in claim 59,
wherein the-radio communication line is a radio LAN.

**61.** (Added) A program data communication system comprising:
the program data transmitter apparatus as claimed in any one of claims 30 to 42; and
the program data receiver apparatus as claimed in any one of claims 43 to 53, and
wherein said program data transmitter apparatus and the program data receiver apparatus are connected to each other through a predetermined communication line.

**62.** (Added) A program data communication system comprising:
the program data transmitter apparatus as claimed in any one of claims 54 to 58;
the program data receiver apparatus as claimed in any one of claims 43 to 53; and
the content server apparatus as claimed in claim 54, and
wherein the program data transmitter apparatus and said content server apparatus are connected to each other through a predetermined first communication line, and
wherein the program data transmitter apparatus and the program data receiver apparatus are connected to each other through a predetermined second communication line.

**63.** (Added) The program data communication system as claimed in claim 61,
wherein information for identifying a network, information for identifying a service, and information for identifying a CA module are stored in a data region of a notification request command signal for requesting a notification as to whether the program data can be descrambled.

**64.** (Added) The program data communication system as claimed in claim 63,
wherein information for indicating an agreement status of the program and information for discriminating whether the program is purchasable or unpurchasable are stored in a data region of a notification command signal including information as to whether the program data can be descrambled.

**65.** (Added) The program data communication system as claimed in claim 64,
wherein a terminal ID of said data receiver apparatus is stored in a data region of a notification command signal for requesting purchase of the additional provided service.

**66.** (Added) The program data communication system as claimed in claim 61,
wherein data on a list of packages for which a user of said data transmitter apparatus having been already concluded viewing agreements or a list of services having been already purchased by the user is stored in a data region of a notification command signal including information as to whether the program data can be descrambled.

**67.** (Added) The program data communication system as claimed in claim 62,
wherein a user ID, a password, and a terminal ID are stored in a data region of a notification request command signal for requesting a notification as to whether the program data can be descrambled.

**68.** (Added) The program data communication system as claimed in claim 67,
wherein information for indicating an agreement status of the program and information for discriminating whether the program is purchasable or unpurchasable are stored in a data region of a notification command signal including information as to whether the program data can be descrambled.

**69.** (Added) The program data communication system as claimed in claim 68,
wherein a terminal ID of said data receiver apparatus is stored in a data region of a notification command signal for requesting purchase of the additional provided service.

Statement under Art. 19.1 PCT
Claims 1 to 29 is cancelled, and claims 30 to 69 are newly added. In particular, the program data transmitter apparatus as claimed in independent claim 30 includes the contents of respective parts of claims 1 and 17 before the amendment, and the program data receiver apparatus as claimed in independent claim 43 includes the contents of respective parts of claims 10 and 17 before the amendment. In addition, the claims 30 and 43 are amended so as to include limitations based on Fig. 11 as originally filed, and the description of the specification (in particular, See on page 34 line 19 to page 35 line 18, and the like).

It is to be noted that the relationship between the claims after the amendment and the claims before the amendment is as follows.
**1.** Claim 33 after the amendment corresponds to claim 5 before the amendment.
**2.** Claims 36 to 38 after the amendment correspond to claims 2 to 4 before the amendment, respectively.
**3.** Claims 39 to 42 after the amendment correspond to claims 6 to 9 before the amendment, respectively.
**4.** Claims 46 to 51 after the amendment correspond to claims 11 to 16 before the amendment, respectively.
**5.** Claims 54 and 55 after the amendment correspond to claims 17 and 18 before the amendment, respectively.
**6.** Claims 59 to 69 after the amendment correspond to claims 19 to 29 before the amendment, respectively.

The program data transmitter apparatus as claimed in claim 30 after the amendment is **characterized, in** particular, by including the first communication means for transmitting descrambled program data to a program data receiver apparatus as authenticated based on authentication information, in response to the following signals as transmitted from the program data receiver apparatus:
(a) a notification request command signal for requesting a notification as to whether or not at least one designated program data among the plurality of pieces of program data can be descrambled,
(b) an authentication information notification command signal for notifying the authentication information, and
(c) a transmission request command signal for requesting transmission of the program data.

In addition, the program data receiver apparatus as claimed in claim 43 after the amendment is a program data receiver apparatus provided to oppose to the program data transmitter apparatus, and is **characterized, in** particular, by including the second communication means for transmitting (a) a notification request command signal for requesting a notification as to whether or not at least one designated program data among a plurality of pieces of program data can be descrambled and (b) an authentication information notification command signal for notifying authentication information, to a program data transmitter apparatus, where the second communication means transmits a transmission request command signal for requesting that the designated program data be descrambled and then transmitted, to the program data transmitter apparatus, and further, the second communication means receives the descrambled program data from the program data transmitter apparatus.

The present invention after the amendment exhibits such unique advantageous effects that the descrambled program data can be transmitted to the program data receiver apparatus that is authenticated based on the authentication information, in response to the notification request command signal, the authentication information notification command signal, and the transmission request command signal.
